(19) Europäisches Patentamt
European Patent Office
Office européen des brevets

(11) **EP 3 199 615 A1**

(12) **EUROPEAN PATENT APPLICATION**
published in accordance with Art. 153(4) EPC

(43) Date of publication:
02.08.2017 Bulletin 2017/31

(51) Int Cl.:
*C12M 1/00* (2006.01)  *C12Q 1/68* (2006.01)
*G01N 27/28* (2006.01)  *G01N 27/327* (2006.01)
*G01N 27/416* (2006.01)

(21) Application number: 15845209.4

(22) Date of filing: 17.09.2015

(86) International application number:
PCT/JP2015/076532

(87) International publication number:
WO 2016/047561 (31.03.2016 Gazette 2016/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 22.09.2014 JP 2014192775
22.09.2014 JP 2014192795
30.09.2014 JP 2014202124
30.09.2014 JP 2014202267
01.09.2015 JP 2015172292

(71) Applicant: Toshiba Medical Systems Corporation
Otawara-shi
Tochigi 324-8550 (JP)

(72) Inventors:
• KUWABARA Tetsuya
Tokyo 105-8001 (JP)
• OKADA Jun
Tokyo 105-8001 (JP)
• UNNO Hirotaka
Tokyo 105-8001 (JP)
• YUMOTO Masayuki
Tokyo 105-8001 (JP)
• MURANO Yutaka
Tokyo 105-8001 (JP)

(74) Representative: Moreland, David
Marks & Clerk LLP
Aurora
120 Bothwell Street
Glasgow G2 7JS (GB)

(54) **NUCLEIC ACID ANALYSIS DEVICE**

(57) A nucleic acid inspection apparatus has an installer to install a nucleic acid inspection device, the installer comprising a storage unit to store at least a specimen sample, an amplifier to amplify nucleic acid contained in the specimen sample stored in the storage unit, a first flow passage to move the specimen sample from the storage unit to the amplifier, an inspection unit, and a second flow passage to move the specimen sample from the amplifier to the inspection unit, a first opening/closing unit to open/close the first flow passage, a second opening/closing unit to open/close the second flow passage, a heater to heat the amplifier, and a controller to control the first and second opening/closing units so as to open/close in a predetermined order and to control the heater so as to heat the amplifier in conjunction with opening/closing operations of the first and second opening/closing units.

FIG. 39

EP 3 199 615 A1

**Description**

<u>FIELD</u>

Embodiments of the present invention relate to a nucleic acid inspection apparatus.

<u>BACKGROUND</u>

As for this type of inspection apparatus, an apparatus using a current detection type DNA chip has been known. The current detection type DNA chip has at least one DNA probe having a known base sequence disposed on a plurality of electrodes provided on a substrate. A current that flows when the DNA probe and DNA of an inspection target join together is detected to identify the type of DNA contained in the inspection target.

However, the conventional current detection type DNA chip has a smaller number of electrodes provided on the substrate, and hence the number of detectable genes is small.

Moreover, before DNA inspection by the above-described current detection, an amplification process to the DNA contained in the inspection target has to be performed. Conventionally, since after nucleic acid amplification is performed in a container, the container is changed to another one to perform the DNA inspection, it is troublesome for an operator, so that there is a problem that the DNA inspection cannot be performed in a short time.

The problem to be solved by the present invention is to provide a nucleic acid inspection apparatus capable of performing nucleic acid inspection accurately in a short time, without being troublesome to an operator.

In a nucleic acid inspection device attached to a nucleic acid inspection apparatus according to the present embodiment, a storage unit stores at least a specimen sample. An amplifier amplifies nucleic acid contained in the specimen sample stored in the storage unit. A first flow passage moves the specimen sample from the storage unit to the amplifier. A detector detects the nucleic acid contained in the specimen sample nucleic-acid amplified by the amplifier. A second flow passage moves the specimen sample from the amplifier to the detector.

In the nucleic acid inspection apparatus, a first opening/closing unit opens/closes the first flow passage. A second opening/closing unit opens/closes the second flow passage. A heater heats the amplifier. A controller controls the first and second opening/closing units so as to open/close in a predetermined order and controls the heater so as to heat the amplifier in conjunction with opening/closing operations of the first and second opening/closing units.

<u>BRIEF DESCRIPTION OF DRAWINGS</u>

FIGs. 1A, 1B and 1C are external views of a nucleic acid inspection system provided with a nucleic acid inspection apparatus according to an embodiment, a unit configuration diagram of the nucleic acid inspection apparatus, and an illustration showing opening and closing of trays provided to the nucleic acid inspection apparatus;

FIG. 2 is a diagram showing an example of GUI windows displayed on a display screen of an information processing apparatus;

FIGS. 3A to 3C are illustrations explaining that a DNA probe and a DNA to be inspected are complementary to each other;

FIGS. 4A to 4D are illustrations explaining a base sequence detection chip;

FIGS. 5A and 5B are waveform diagrams showing an example of measurement results of an oxidation current detected from the base sequence detection chip;

FIG. 6 is an external view of a nucleic acid inspection card;

FIG. 7 is a perspective view showing the configuration of the nucleic acid inspection card;

FIG. 8A, 8B and 8C are perspective views showing the configuration of four syringes;

FIG. 9 is a diagram showing a flow passage model of the nucleic acid inspection card;

FIG. 10 is a sectional view of a valve NOV;

FIG. 11A and 11B are views showing the configuration of an NC valve;

FIG. 12 is a diagram showing a flow passage model of the nucleic acid inspection card;

FIG. 13 is a plan view showing the detailed configuration of an amplification flow passage;

FIG. 14 is sectional view of a base sequence detection chip using a three-electrode method;

FIG. 15 is a diagram showing an example of a current detection system of the base sequence detection chip;

FIG. 16 is a plan view showing the detailed configuration of a DNA chip;

FIG. 17 is an illustration showing an example of the shape and arrangement of working electrodes in a working electrode group according to a first embodiment;

FIGS. 18(a) and 18(b) are illustrations showing the shape and arrangement of working electrodes in a working electrode group according to the first embodiment and a comparison example, respectively;

FIG. 19 is an illustration showing another example of the shape and arrangement of working electrodes in a working electrode group according to the first embodiment;

FIG. 20 is an illustration explaining the cause of generation of bubbles;

FIG. 21 is an illustration showing the relationship between a flow passage width and a bubble arrival position;

FIG. 22 is plan view of the base sequence detection chip of the first embodiment, formed with flow passages;

FIG. 23 is a block diagram of a control system of a nucleic acid inspection apparatus according to an embodiment;

FIG. 24 is an illustration of air flow by a frame fan in a nucleic acid inspection;

FIG. 25 is an external view of a heater and a Peltier device;

FIG. 26 is a plan view showing the installation locations of five motors, a syringe rod, an NCV rod, an NOV rod, a temperature adjustment supporter, and a probe holder driven by the motors;

FIG. 27 is a sectional view of a rack gear;

FIG. 28 is a plan view showing a syringe rod driven by a syringe-axis motor;

FIG. 29 is a perspective view of a punch;

FIGS. 30A and 30B are illustrations showing examples of pushing a syringe with punches having different widths;

FIG. 31 is an illustration showing the relationship between a syringe position shift and a liquid amount from a syringe;

FIG. 32 is a view of a tapered syringe rod;

FIG. 33 is a plan view showing an NCV rod driven by an NCV-axis motor;

FIGS. 34(a), 34(b), and 34(c) are views of tip shapes of fork portions;

FIG. 35 is a plan view showing an NOV rod driven by an NOV-axis motor;

FIGS. 36A and 36B are a plan view and a perspective view, respectively, of a temperature adjustment supporter driven by a heater-Peltier-axis motor;

FIGS. 37A and 37B are a plan view and a perspective view, respectively, of a probe holder driven by a probe-axis motor;

FIG. 38 is an illustration of a positioning pin;

FIG. 39 is a flowchart showing an example of a drive sequence of each motor by a controller;

FIG. 40A, 40B, 40C, 40D and 40E are diagrams showing a move state of a liquid on a nucleic acid inspection card;

FIG. 41 is a block diagram of a control system of a nucleic acid inspection apparatus;

FIG. 42 is a functional block diagram related to self-diagnosis of an information processing apparatus according to the present embodiment;

FIG. 43 is an illustration showing an example of a display window of a self-diagnosis result;

FIG. 44 is a display example of a diagnosis window on which a user arbitrarily selects a self-diagnosis item; and

FIG. 45 is a flowchart showing an example of a self-diagnosis process to be automatically performed by an information processing apparatus when turned on.

DETAILED DESCRIPTION

An embodiment of the present invention will be explained with reference to the drawings. The following embodiment will be explained mainly with unique configurations and operations in a nucleic acid inspection apparatus. However, the nucleic acid inspection apparatus may have configurations and operations, the explanation thereof being omitted in the following explanation. These omitted configurations and operations fall within the scope of the present embodiment.

(Overall Configuration)

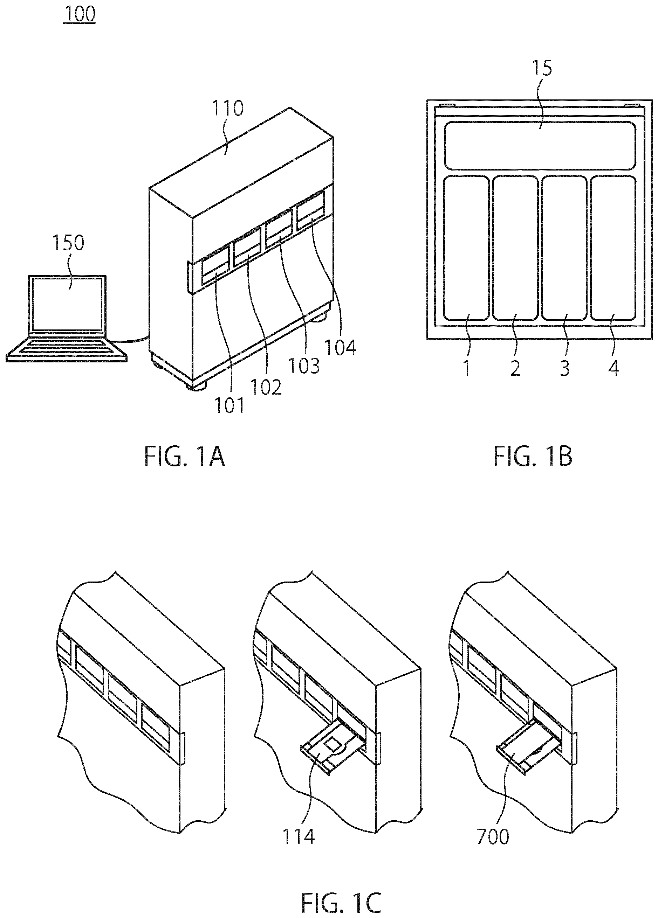

FIG. 1A is an external view of a nucleic acid inspection system provided with a nucleic acid inspection apparatus according to the present embodiment. FIG. 1B is a unit configuration diagram of the nucleic acid inspection apparatus. FIG. 1C an illustration showing opening and closing of trays provided to the nucleic acid inspection apparatus. As shown in FIG.1A, a nucleic acid inspection system 100 is provided with a nucleic acid inspection apparatus 110 and an information processing apparatus 150. The nucleic acid inspection apparatus 110 is, as described later, to inspect nucleic acid contained in a specimen sample. The information processing apparatus 150 is to instruct inspection conditions, inspection start, etc. to the nucleic acid inspection apparatus 110, analyze an inspection result by the nucleic acid inspection apparatus 110, and display the result.

The nucleic acid inspection apparatus 110 according to the present embodiment has a future of inspecting a plurality of specimen samples at a time. In the example of FIG. 1B, four inspection units 1, 2, 3 and 4, and a control substrate 15 are provided so as to inspect four kinds of specimen samples at a time. The inspection units 1, 2, 3 and 4 operate independently from one another under control by the control substrate 15 to perform nucleic acid inspection of the respective specimen samples at different timings.

The respective specimen samples are taken in and out from the nucleic acid inspection apparatus 110 through shutters 101, 102, 103 and 104 while the specimen samples are put in detachable nucleic acid inspection cards (nucleic acid inspection devices) 700. In order to taken in and out the specimen samples easily, trays 114 (installers) such as shown in FIG. 1C are provided to the inspection units 1, 2, 3 and 4, respectively. When the nucleic acid inspection cards 700 are placed on the trays 111, 112, 113 and 114, respectively, thereafter, nucleic acid amplification and nucleic acid inspection can be performed automatically.

The nucleic acid inspection apparatus 110 according to the present embodiment itself does not have a setting input function and a display function. Therefore, the compactness and apparatus cost reduction of the nucleic acid inspection apparatus 110 can be achieved. Setting input to the nucleic acid inspection apparatus 110, analysis of a result of nucleic acid inspection, etc. are performed by the information processing apparatus 150 connected to the nucleic acid inspection apparatus 110. The information processing apparatus 150 can be configured with a general-purpose computer such as a PC on the market, and hence is implemented at a low cost and a maintenance cost is not so high. The nucleic acid inspection apparatus 110 and the information processing apparatus 150 transmit and receive several kinds of information via a genera-purpose communication interface, such as, a USB (Universal Serial Bus). As described above, by configuring the nucleic acid inspection system with the nucleic acid inspection apparatus 110 and the information processing apparatus 150, maintenance of the nucleic acid inspection apparatus 110 is made easy, and setting input to the nucleic acid inspection apparatus 110 and analysis and display of a result of nucleic acid inspection are easily performed.

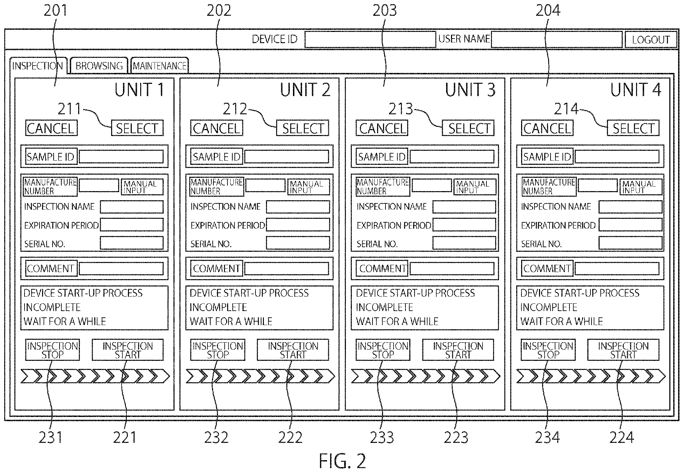

FIG. 2 is a diagram showing an example of GUI windows displayed on a display screen of the information processing apparatus 150. In GUI windows 201, 202, 203 and 204 of FIG. 2, setting input items of four inspection units are displayed respectively. In accordance with the GUI windows 201, 202, 203 and 204, several kinds of information on respective specimen samples can be input for each of the inspection units 1, 2, 3 and 4. The input several kinds of information are transmitted from the information processing apparatus 150 to the nucleic acid inspection apparatus 110, as required, and set into the nucleic acid inspection apparatus 110. In the GUI windows 201, 202, 203 and 204, for example, there are selection buttons 211, 212, 213 and 214 for selecting the inspection units 1, 2, 3 and 4 to be used for nucleic acid inspection, inspection start buttons 221, 222, 223 and 224 for instructing inspection start, and display areas 231, 232, 233 and 234 for displaying an inspection progress status at the nucleic acid inspection apparatus 110. The information processing apparatus 150 and the nucleic acid inspection apparatus 110 transmit and receive several kinds of information by wired or non-wired communication. Information selected by the selection buttons 211, 212, 213 and 214 or the inspection start buttons 221, 222, 223 and 224 is instantaneously transmitted to the nucleic acid inspection apparatus 110 and inspection progress information at the nucleic acid inspection apparatus 110 is periodically transmitted from the nucleic acid inspection apparatus 110 to the information processing apparatus 150.

GUI windows 201, 202, 203, and 204 displayed on a display screen of the information processing apparatus 150 can be arbitrarily modified by software. Therefore, the GUI windows 201, 202, 203, and 204 of FIG. 2 are merely an example. By updating the software, it is possible to provide user-friendly GUI windows, easily compatible with new types of nucleic acid inspection.

(Basic Principle of Nucleic Acid Inspection)

Before explaining the nucleic acid inspection apparatus 110 according to the present embodiment in detail, the basic principle of nucleic acid inspection adopted by the present embodiment will be explained.

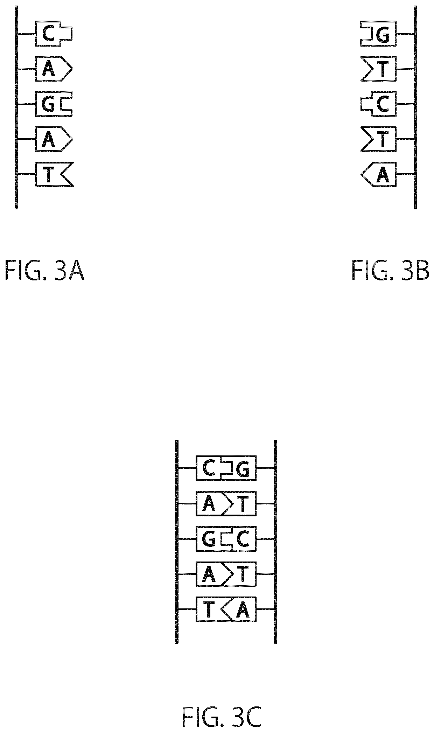

DNA has a double-stranded structure that has two strands each with a sequence of A (adenine), T (thymine), G (guanine), and C (cytosine), joined to each other. The double-stranded structure is a joint structure of a specific combination of the bases A, T, G, and C. Since a piece of DNA can be easily synthesized, on a DNA chip 500, a known single-stranded base sequence is fixed on an electrode, as a probe. DNA of a specimen sample is also modified to have a single strand and is reacted with the DNA probe fixed on the electrode. If the sequence of the DNA of the specimen sample is complementary to the sequence of the DNA probe, the sequences join to each other to become a double-stranded structure. For example, as shown in FIG. 3A, when the DNA probe has a sequence in order of TAGAC, if the DNA of the specimen sample has a sequence in order of ATCTG (FIG. 3B), since the sequences are complementary to each other, these pieces of single-stranded DNA shown in FIG. 3C join to each other to become a double-stranded structure. Accordingly, it is referred to as hybridization that the base sequence of the specimen sample joins to the complementary base sequence of the DNA probe to become a double-stranded structure.

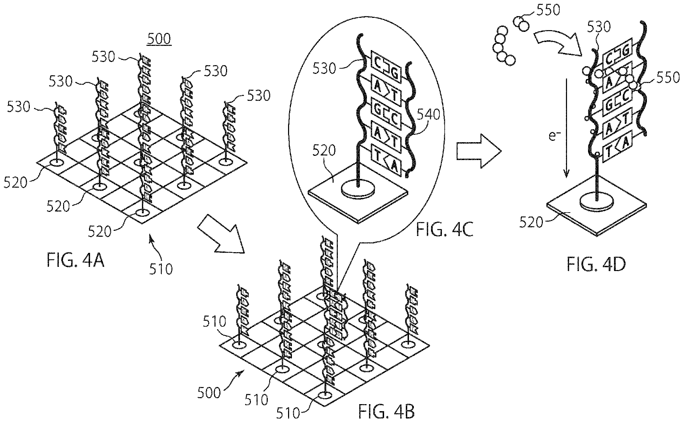

As shown in FIG. 4A, the DNA chip 500 is fabricated in a manner that, for example, a plurality of electrodes 520 are arranged apart from one another on a substrate 510 made of, for example, glass or silicon and DNA probes 530 having different sequences are fixed on the respective electrodes 520. On this DNA chip 500, a nucleic-acid amplified specimen sample is made flown. In this occasion, if a DNA probe 530 having a base sequence complementary to the base sequence in the specimen sample is present on the DNA chip 500, both join to each other to cause hybridization to create a double-stranded DNA (FIGS. 4B and 4C). On the other hand, if a DNA probe 530 having a base sequence complementary to the base sequence in the specimen sample is not present on the DNA chip 500, hybridization does not occur. Thereafter, the DNA chip 500 is washed and a reagent (solution) containing an intercalating agent 550 is made flown on the DNA chip 500. Then, the intercalating agent 550 joins to the hybridized double-stranded DNA probe 530. In this state, when a voltage is applied to the DNA chip 500, an oxidation current of the intercalating agent 550 flows to the electrode 520 on which the hybridized double-stranded DNA probe 530 is fixed (FIG. 4D).

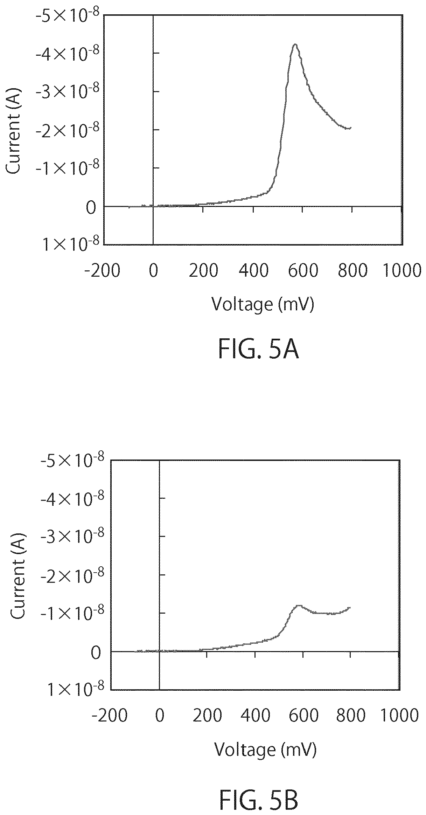

An example of this oxidation current, that is, a signal from the electrode on which hybridization has occurred is shown in FIG.5A. An example of a signal from an electrode on which no hybridization occurs is shown in FIG.5B. As understood from FIG. 5A, when the voltage applied to the DNA chip 500 is increased, the oxidation current suddenly increases at a voltage of about 500 mV. In contrast, the signal value from the electrode on which no hybridization occurs increases a little bit when the voltage applied to the DNA chip 500 reaches about 500 mV, however, compared to the case shown in FIG. 5A, the degree of increase is small. In this way, by determining from which electrode a current is detected, the DNA sequence of the specimen sample can be identified.

The nucleic acid inspection apparatus 110 according to the present embodiment detects, in accordance with the above-describe basic principle, whether there is an oxidation current flowing to the electrodes on the DNA chip 500 to inspect the DNA of the specimen sample.

The target of the specimen-sample nucleic acid inspection of the present embodiment is not necessarily limited to DNA (Deoxyribonucleic Acid), which is applicable to several kinds of nucleic acid, such as RNA (ribonucleic Acid), oligonucleotide, and polynucleotide. Nevertheless, in the following explanation, an example of inspection of DNA in a specimen sample will be explained.

(Nucleic Acid Inspection Card)

In the nucleic acid inspection apparatus 110 according to the present embodiment, a specimen sample is put into a detachable nucleic acid inspection card 700 to perform inspection by the nucleic acid inspection apparatus 110.

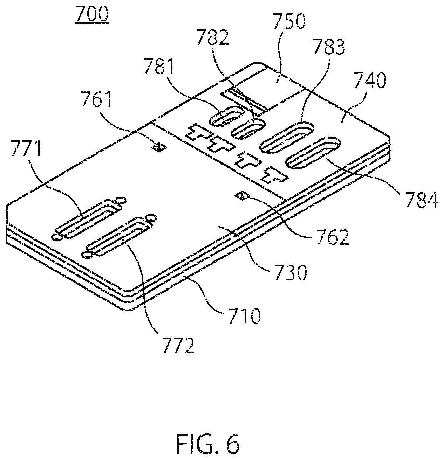

FIG. 6 is an external view of the nucleic acid inspection card 700. The nucleic acid inspection card 700 is a detachable thin rectangular body, which is configured with a cap 750, a cover 740, an upper plate 730, a packing 720, a DNA chip 500, and a lower plate 710. Among them, the cap 750, the cover 740, the upper plate 730, and the lower plate 710 are formed with a hard resin member such as PC (polycarbonate), the packing 720 is formed with an elastic resin member such as elastomer, and the DNA chip 500 is formed with a transparent base such as glass.

As described above, the nucleic acid inspection card 700 can be assembled with just six parts, a material cost and the number of fabrication steps can be reduced to provide the nucleic acid inspection card 700 at a low price. Especially, since the nucleic acid inspection card 700 according to the present embodiment is intended for disposal use, it is a big advantage that the nucleic acid inspection card 700 can be provided at a low price.

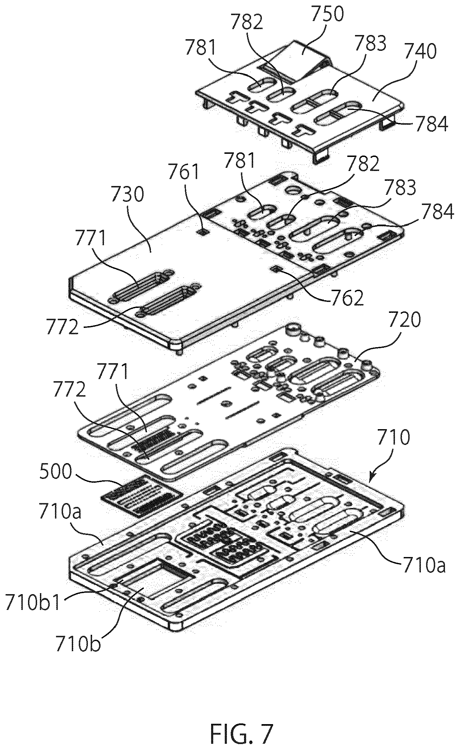

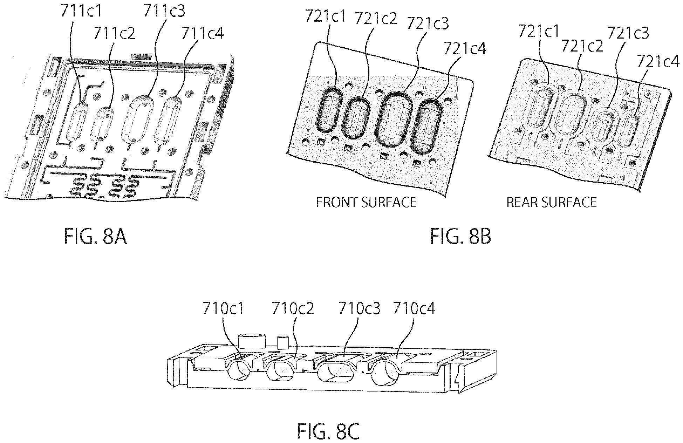

FIG. 7 is a view explaining assembling steps of the nucleic acid inspection card 700. On the lower plate 710, the DNA chip 500 is disposed and, on the DNA chip 500, the packing 720 is disposed. On the lower plate 710, as shown in FIG. 8A, four concave portions 711C1, 711C2, 711C3, and 711C4 are formed by integral molding, so as to correspond to the locations of four syringes. On the packing 720, as shown in FIG. 8B, four dome-like convex portions 721C1, 721C2, 721C3, and 721C4 are formed by integral molding, so as to correspond to the locations of the four syringes. When packing 720 is attached on the lower plate 710, as shown in FIG. 8C, the concave portions and the convex portions are arranged to face each other to form four syringes 710C1, 710C2, 710C3, and 710C4, as storage units. In these syringes 710C1, 710C2, 710C3, and 710C4, as described later, a specimen sample, a cleaning solution, and the like are separately stored.

On the lower plate 710, as shown in FIGS. 7 and 8A, ditches that become flow passages through which liquids flow are formed in the direction from the syringes 710C1, 710C2, 710C3, and 710C4 to the DNA chip 500. The packing 720 also have ditches formed so as to match the location of the ditches of the lower plate 710. Therefore, when the packing 720 is attached to the lower plate 710, flow passages are formed with the ditches arranged to face each other. Although, the upper surface of the DNA chip 500 to which the lower plate 710 is attached is a flat surface, since the ditches are formed in the locations on the packing 720 that faces the DNA chip 500, when the packing 720 is attached to the lower plate 710, an inspection flow passage (inspection unit) 712 is formed on the DNA chip 500. This inspection flow passage 712 is connected to the flow passages formed with the ditches of the lower plate 710 and the ditches of the packing 720.

Subsequently, the upper plate 730 is attached on the lower plate 710. Part of the upper plate 730 is an outer surface of the nucleic acid inspection card 700. As shown in FIGS. 6 and 7, two through holes 771 and 772 are provided so as to match the locations of the electrodes of the DNA chip 500. The through holes 771 and 772 are used for inserting a current probe 186 from above to make the current probe 186 contact with the electrodes on the DNA chip 500.

On the upper plate 730, two through holes 761 and 762 are provided for NO (Normally Open) valves 710a1 and 710a2 that shut off an amplification flow passage (amplifier) 710f of the nucleic acid inspection card 700 from a flow passage that is connected to the amplification flow passage 710f. The through holes 761 and 762 are used for inserting

**EP 3 199 615 A1**

third rods 241 (third opening/closing units) and 243 (second opening/closing unit) to open/close the NO valves 710a1 and 710a2, respectively.

Subsequently, the cover 740 is attached to cover part of the upper plate 730. As shown in FIGS. 6 and 7, the upper plate 730 and the cover 740 are provided with four through holes 781, 782, 783, and 784 so as to match the locations of the four syringes 710C1, 710C2, 710C3, and 710C4. The through holes 781, 782, 783, and 784 are used for inserting first rods 201, 202, 203, and 204 of a syringe rod 20 from above to push out liquids in the syringes 710C1, 710C2, 710C3, and 710C4 to the flow passages.

The upper plate 730 and the cover 740 are provided with four through holes 720d1, 720d2, 720d3, and 720d4 so as to match injection holes of the four syringes 710C1, 710C2, 710C3, 710C4. Via the through holes 720d1, 720d2, 720d3, and 720d4, liquids are injected into the four syringes 710C1, 710C2, 710C3, 710C4. In more specifically, a specimen sample, a first cleaning solution, an intercalating agent, and a second cleaning solution are injected into the syringes 710C1, 710C2, 710C3, 710C4, respectively, via the separate injection holes 710d1, 710d2, 710d3, and 710d4. Here, the specimen sample is, for example, a liquid containing any one of enzyme, triphosphate deoxyribonucleotide (dNTP), a surfactant, magnesium chloride, and ammonium sulfate. The first cleaning solution is, for example, a liquid containing sodium citrate or sodium chloride. The intercalating agent is, for example, a liquid containing Hoechst 33258 (Hoechst 33258). The second cleaning solution is, for example, a liquid containing sodium citrate or sodium chloride.

Moreover, the upper plate 730 and the cover 740 are provided with four syringes 710C1, 710C2, 710C3, and 710C4, and through holes 710h1, 710h2, 710h3, and 710h4 for four NC (Normally Close) valves 710v1, 710v2, 710v3, and 710V4 that shut off flow passages connect to the respective syringes 710C1, 710C2, 710C3, and 710C4. The through holes 710h1, 710h2, 710h3, and 710h4 are used for inserting second rods 221 (first opening/closing unit), 222 (fourth opening/closing unit), 223 (fifth opening/closing unit), and 224 (sixth opening/closing unit) to open/close the NC valves 710v1, 710v2, 710v3, and 710V4, respectively.

Subsequently, a cap 750 is attached to the cutaway of the cover 740 with a hinge to complete the nucleic acid inspection card 700. The cap 750 is provided for a user himself or herself to inject the specimen sample from the injection hole 710d1. The first cleaning solution, the second cleaning solution, and the intercalating agent, other than the specimen sample, have already been injected into the associated syringes, in advance, at the stage of assembling the nucleic acid inspection card 700. What the user injects thereafter is the specimen sample only. Therefore, the cap 750 for covering the injection hole 710d1 for the specimen sample is provided.

As described above, the nucleic acid inspection card 700 according to the present embodiment, is provided with the plurality of syringes 710C1, 710C2, 710C3, and 710C4 for separately storing the specimen sample and the like, the amplification flow passage 710f for nucleic acid amplification, and the inspection flow passage 712 for DNA inspection, capable of nucleic acid amplification and DNA inspection with one card without replacing the specimen sample, reagent, etc., thus achieving automatic DNA inspection.

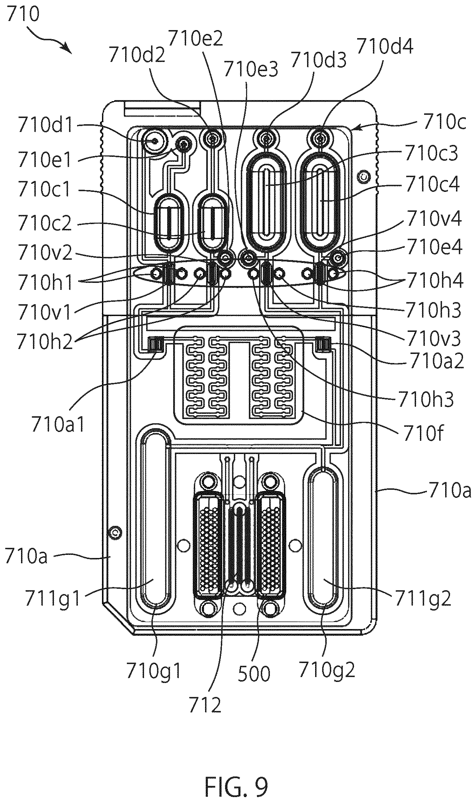

FIG. 9 is a plan view of the nucleic acid inspection card 700 from which the cap, the cover 740, and the upper plate 730 have been detached. As shown in FIG. 9, the four syringes 710C1, 710C2, 710C3, and 710C4 are arranged in the lateral direction on one side of the nucleic acid inspection card 700 in the longitudinal direction. The leftmost syringe (first storage unit chamber) 710C1 stores the specimen sample. The syringe (second storage chamber) 710C2, the second one from the leftmost, stores the first cleaning solution. The syringe (fourth storage chamber) 710C3, the second one from the rightmost, stores the intercalating agent. The rightmost syringe (third storage chamber) 710C4 stores the second cleaning solution.

On the side of the syringes 710C1, 710C2, 710C3, and 710C4, the injection holes 710d1, 710d2, 710d3, and 710d4 for injecting liquids into the syringes 710C1, 710C2, 710C3, and 710C4, respectively, and exhaust holes 710e1, 710e2, 710e3, and 710e4 for releasing air in the syringes 710C1, 710C2, 710C3, and 710C4, respectively, are provided.

On the center of the nucleic acid inspection card 700 in the longitudinal direction, the amplification flow passage 710f for amplifying nucleic acid in the specimen sample is provided. The amplification flow passage 710f and the syringe (710C1) for storing the specimen sample are connected with a flow passage (first flow passage). This flow passage is branched off half way and, to the branched flow passage (third flow passage), the syringe (710C2) for storing the first cleaning solution is connected. Moreover, the amplification flow passage 710f and the inspection flow passage 712 in the DNA chip 500 are connected to each other with a flow passage (second flow passage). Therefore, the specimen sample that is nucleic-acid amplified in the amplification flow passage 710f can be pushed out by the first cleaning solution, and hence, without complicated valve control, the specimen sample can be moved to the inspection flow passage 712 on the DNA chip 500.

The second flow passage is branched off half way, and, to the branched flow passage (fourth flow passage), the syringe (710C4) for storing the second cleaning solution is connected. Moreover, the flow passage (fourth flow passage) is branched off half way, and, to the branched flow passage (fifth flow passage), the syringe (710C3) for storing the intercalating agent is connected. Therefore, the second cleaning solution accumulated in the inspection flow passage 712 can be pushed out by the intercalating agent.

On both sides of the amplification flow passage 710f, the NO valves 720a1 and 7120a2 are provided. The NO

6

valves 720a1 and 7120a2 are normally opened so that a liquid can freely flows between the flow passage connected to the amplification flow passage 710f and the amplification flow passage 710f. When the NO valves 720a1 and 7120a2 are closed, the amplification flow passage 710f and the flow passage connected to the amplification flow passage 710f are shut off so that it does not occur that the liquid in the amplification flow passage 710f flows back into the syringes 710C1, 710C2, 710C3, and 710C4 though the flow passage, or flows in the inspection flow passage712 of the DNA chip 500. In the present embodiment, during the nucleic acid amplification in the amplification flow passage 710f, the NO valves 720a1 and 720a2 are closed, so that the nucleic-acid amplified specimen sample is not mixed with the specimen sample in the syringe (710C1).

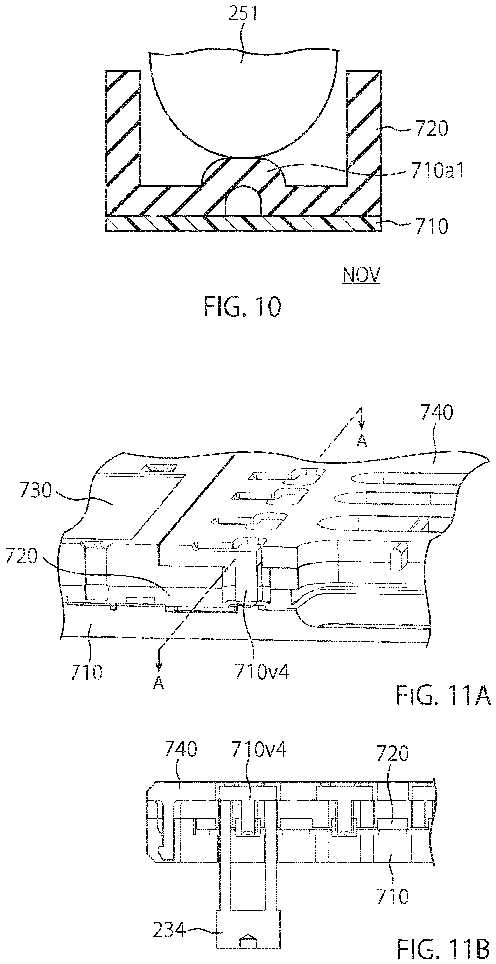

FIG. 10 is a schematic sectional view showing the configuration of the NO valve. The packing 720 disposed on the lower plate 710 has a dome-like convex portion on the location where the NO valve 720a1 is formed and a flow passage is formed within the convex portion. When the convex portion is pushed from above with the syringe rod 251, the flow passage is closed. The NO valve 720a2 is also formed in the same manner as described above.

Returning to FIG. 9, in the vicinity of connecting points of the syringes 710C1, 710C2, 710C3, and 710C4, and the flow passages, NC valves 710v1, 710v2, 710v3, and 710V4 are provided. Since there are four syringes 710C1, 710C2, 710C3, and 710C4, four NC valves 710v1, 710v2, 710v3, and 710V4 are provided. The NC valves 710v1, 710v2, 710v3, and 710V4 are normally closed to shut off the syringes 710C1, 710C2, 710C3, and 710C4, and the flow passages connected thereto. When the NC valves 710v1, 710v2, 710v3, and 710V4 are opened, the syringes 710C1, 710C2, 710C3, and 710C4, and the flow passages are connected, so that liquids in the syringes 710C1, 710C2, 710C3, and 710C4 associated with the opened NC valves 710v1, 710v2, 710v3, and 710V4 flow into the flow passages connected to the syringes 710C1, 710C2, 710C3, and 710C4.

FIG. 11 is a view showing the configuration of the NC valve. FIG. 11A is a perspective view and FIG. 11B is a sectional taken on line A-A of FIG. 11A. The NC valves 710v1, 710v2, 710v3, and 710V4 are cantilevers formed with a cover 740. The base portion of each cantilever is supported by the cover 740 while the top portion of the cantilever is movable and the top portion is energized in the direction to close each flow passage. Therefore, normally, the flow passages are closed. By pushing up around the top portions of the cantilevers with fork portions 231, 232, 233, and 224 of the NCV rod 23 at the top side, the top portions of the cantilevers are raised to open the flow passages.

Returning to FIG. 9, on the opposite side to the locations where the four syringes 710C1, 710C2, 710C3, and 710C4 are arranged having the amplification flow passage710f of the nucleic acid inspection card 700 located therebetween, in the lateral direction, a waste liquid tank 711g1, the DNA chip 500, and a waste liquid tank 711g2 are arranged. The specimen sample nucleic-acid amplified in the amplification flow passage 710f passes through the flow passage and flows into the inspection flow passage 712 on the DNA chip 500. Thereafter, the first cleaning solution flows into the inspection flow passage 712 and the specimen sample in the inspection flow passage 712 moves to the waste liquid tank. Subsequently, when the second cleaning solution flows into the inspection flow passage 712, the first cleaning solution moves to the waste liquid tank, further subsequently, when the intercalating agent flows into the inspection flow passage 712, the second cleaning solution moves to the waste liquid tank.

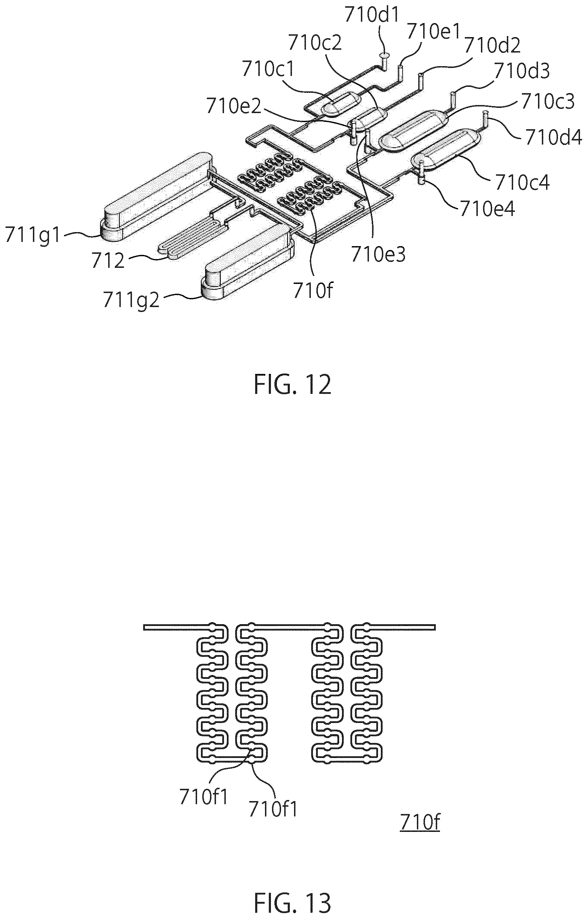

FIG. 12 is a diagram showing a flow passage model of the nucleic acid inspection card 700. The specimen sample, the first cleaning solution, the intercalating agent, and the second cleaning solution are injected from the injection holes 710d1, 710d2, 710d3, and 710d4, respectively, and stored in the syringes 710C1, 710C2, 710C3, and 710C4, respectively. When the NC valve 710v1 is opened, the specimen sample stored in the syringe (710C1) passes through the flow passage and reaches the amplification flow passage 710f. Then the NO valves 720a1 and 7120a2 are closed to perform nucleic acid amplification. Thereafter, when the NC valve 710v2, and the NO valves 720a1 and 7120a2 are opened, the first cleaning solution stored in the syringe (710C2) reaches the amplification flow passage 710f. The specimen sample accumulated so far in the amplification flow passage 710f passes through the flow passage, as the specimen sample is pushed out by the first cleaning solution, and reaches the inspection flow passage 712 on the DNA chip 500. Thereafter, when the NC valve 710v4 is opened, the second cleaning solution stored in the syringe (710C4) passes through the flow passage to reach the inspection flow passage 712 on the DNA chip 500. The specimen sample accumulated so far in the inspection flow passage 712 moves to the waste liquid tanks 711g1 and 711g2. Thereafter, when the NC valve 710v3 is opened, the intercalating agent stored in the syringe 710C3 passes through the flow passage to reach the inspection flow passage 712 on the DNA chip 500. The second cleaning solution accumulated so far in the inspection flow passage 712 moves to the waste liquid tanks 711g1 and 711g2.

FIG. 13 is a plan view showing the detailed configuration of the amplification flow passage 710f. As shown in FIG. 13, the amplification flow passage 710f meanders so that a liquid flows slowly. For nucleic acid amplification, for example, the LAMP (Loop-Mediated Isothermal Amplification) method is used. In the amplification flow passage 710f, a primer that joins part of nucleic acid in the specimen sample to be amplified is placed in advance. When the specimen sample is inject into the amplification flow passage 710f and heated to a predetermined temperature, nucleic acid amplification can be completed in mere several ten minutes. Amplified products by nucleic acid amplification include, not only double stands of DNA, but also a single strand. In the inspection flow passage 712 on the DNA chip 500, which will be described later, the single strand created by nucleic acid amplification is used for current detection.

The method of nucleic acid amplification according to the present embodiment is not necessarily be limited to the LAMP method. Several kinds of nucleic acid amplification methods, such as, the PCR (Polymerase Chain Reaction) method, may be used.

In the amplification flow passage 710f, there are a plurality of wells in which liquids are temporary accumulated at an even interval. The inventor of the present invention firstly found that, by providing such wells, multi-amplification to amplify different pieces of DNA can be performed. The inventor of the present invention found that the gap between the wells is preferably 4 mm or more along the flow passage.

(Current Detection)

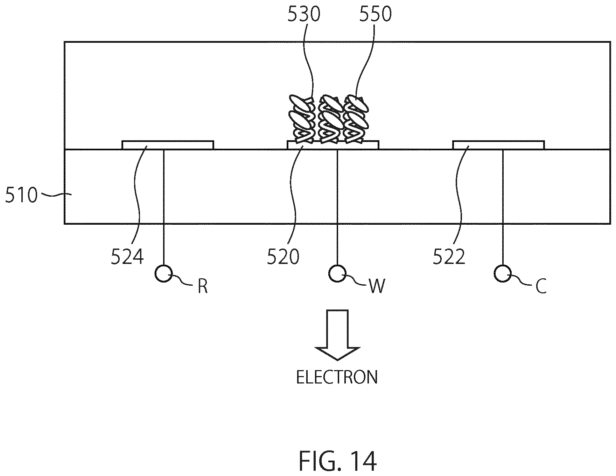

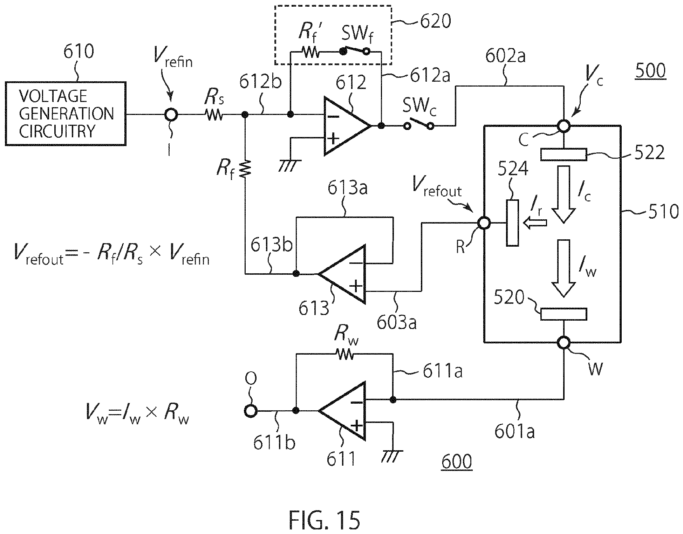

Subsequently, one example of current detection in the DNA chip 500 will be explained with respect to FIGS. 14 and 15. For the current detection, for example, a three-electrode method is used. In the DNA chip 500 for which three-electrode method is used, for example, as shown in FIG. 14, on the substrate 510, a working electrode 520, a counter electrode 522, and a reference electrode 524 are provided. The working electrode 520, the counter electrode 522, and the reference electrode 524 are provided apart from one another. To the working electrode 520, at least one DNA probe 530 having the identical sequence (three in FIG. 14) is fixed and connected to a terminal W provided on the substrate 510. Although, in order to make the explanation easy, only one working electrode 520 is shown, generally, a plurality of them are provided. The counter electrode 522 is connected to a terminal C provided on the substrate 510. The reference electrode 524 is connected to a terminal R provided on the substrate 510.

One example of a current detection system for the DNA chip 500 configured as described above is shown in FIG. 15. A current detection system 600 shown in FIG. 15 is a potentiostat in which, by feed-backing a voltage of the reference electrode 524 to the input of the counter electrode 522, a desired voltage is applied in a solution irrespective of variation in several conditions of the electrodes, the solution, etc., in the substrate 510.

The potentiostat 600 varies the voltage of the counter electrode 522 so that the voltage of the reference electrode to the working electrode 520 is set in predetermined characteristics, to electrochemically measure an oxidation current due to the intercalating agent.

The working electrode 520 is an electrode to which the DNA the probe 530 is fixed and is an electrode for detecting a reaction current in the DNA chip (base sequence detection chip) 500. The counter electrode 522 is an electrode to apply a predetermined voltage between itself and the working electrode 520 to supply a current in the base sequence detection chip. The reference electrode 524 is an electrode to feed-back the voltage of the reference electrode 524 to the counter electrode 522 in order to control the voltage between the reference electrode 524 and the working electrode 520 to be in predetermined voltage characteristics. In this way, the voltage by the counter electrode 522 is controlled to perform highly accurate oxidation current detection irrespective of several detection conditions in the base sequence detection chip.

Voltage generation circuitry 610 for generating a voltage pattern for detecting a current flowing between the electrodes is connected to an inverting input terminal of an inverting amplifier 612 for controlling the reference voltage of the reference electrode 524 via a wiring 612b.

The voltage generation circuitry 610 is circuitry to generate a voltage pattern by converting a digital signal input from a control mechanism of a base sequence detection control apparatus (not shown) to an analog signal, provided with a DA converter.

To the wiring 612b, a resistor $R_s$ is connected. In the inverting amplifier 612, a non-inverting input terminal is grounded and an output terminal is connected to a wiring 602a. The wiring 612b on the side of the non-inverting input terminal of the inversion amplifier 612 and the wiring 602a on the output terminal side thereof are connected by a wiring 612a. To the wiring 612a, protection circuitry 620 composed of a feed-back resistor $R_f$ and switch $SW_f$ is provided.

The wiring 602a is connected to the terminal C. The terminal C is connected to the counter electrode 522 on the DNA chip 500. When a plurality of counter electrodes 522 are provided, the terminal C is connected to them in parallel. In this way, with one voltage pattern, a voltage can be applied to a plurality of counter electrodes at the same time. To the wiring 602a, a switch $SW_0$ for on-off control of voltage application to the terminal C is provided.

By means of the protection circuitry 620 provided to the inversion amplifier 612, an excess voltage is not applied to the counter electrode 522. Therefore, there is no likelihood that the excess voltage is applied to the counter electrode 522 at the current detection time, a solution is electrolyzed, and a bad effect may be given to the oxidation current detection, thereby conducting stable measurement.

A terminal R is connected to a non-inverting input terminal of a voltage flower amplifier 613 with a wiring 603a. An inverting input terminal of the voltage flower amplifier 613 is short-circuited by wirings 613b and 613a connected to an output terminal of the voltage flower amplifier 613. To the wiring 613b, a resistor $R_f$ is provided and the resistor Rf is connected, at its one terminal, to the wiring 513b and connected, at the other terminal, between a resistor $R_s$ and the cross point of the wirings 612a and 612b. In this way, the voltage pattern generated by the voltage generation circuitry 610 and the fed-back voltage of the reference electrode 524 are input to the voltage inverting amplifier 612, based on the output which is obtained by amplifying such a voltage by inversion amplification, to control the voltage of the counter electrode 522.

A terminal W is connected to an inverting input terminal W of a trance impedance amplifier 611 with a wiring 601a. In the trance impedance amplifier 611, a non-inverting input terminal is grounded and an output terminal is connected to a wiring 611b and to the inverting input terminal via a wiring611a. To the wiring 611a, a resistor $R_w$ is provided. When a voltage and a current at a terminal O on the output side of the trance impedance amplifier 611 are $V_w$ and $I_w$, respectively, $V_w = I_w \times R_w$ is given. An electrochemical signal obtained from the terminal O is output to the control mechanism of the base sequence detection control apparatus (not shown).

Since there is a plurality of working electrodes 520, a plurality of terminals W and terminals O are provided for the working electrodes 520. The outputs of the terminals O are switched by a signal switch, which will be described later, and are converted by AD conversion, so that electrochemical signals from the respective working electrodes can be obtained as digital values. The circuitry, such as the trance impedance amplifier 611, between the terminals W and O may be shared by the plurality of working electrodes. In this case, a signal switch for switching the wirings from the plurality of terminals W may be provided to the wiring 601a.

Using the potentiostat 600 having such configuration, current measurement in the base sequence detection chip is performed as follows.

1. Firstly, using the potentiostat 600, the potential of the working electrode 520 is made constant with respect to the potential of the reference electrode 524.
2. The working electrode 520 electrolyzes the intercalating agent on the electrode 520.
3. The current required for maintaining electrolysis on the working electrode 520 is a current $I_c$ flowing from the counter electrode 522.
4. In this occasion, the potentiostat 600 accurately measures a current flowing between the working electrode 520 and the counter electrode 522. In other words, almost no current flows to the reference electrode 524.

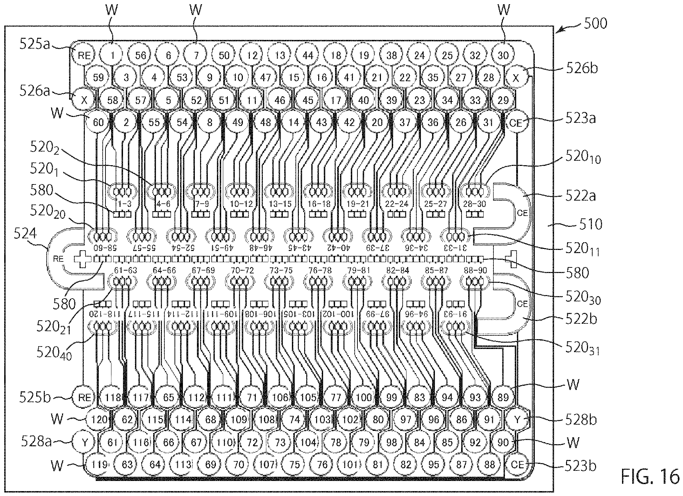

FIG. 16 is a plan view showing the detailed configuration of the DNA chip 500. The DNA chip 500 shown in FIG. 16 is provided with 40 working electrode groups $520_1$ to $520_{40}$, counter electrodes 522a and 522b, and a reference electrode 524, on a solid-phase substrate 51. The counter electrodes 522a and 522b are each denoted by CE in the drawing and the reference electrode 524 is denoted by RE. The solid-phase substrate 510 is, for example, a glass substrate, a silicon substrate, etc.

The 40 working electrode groups $520_1$ to $520_{40}$ are aligned as being divided into a first to a fourth portion. The first portion is composed of 10 working electrode groups $520_1$ to $520_{10}$, aligned from left to right in the drawing. The second portion is composed of 10 working electrode groups $520_{11}$ to $520_{20}$, arranged beneath the first portion in the drawing and aligned from right to left in the drawing. The third portion is composed of 10 working electrode groups $520_{21}$ to $520_{30}$, arranged beneath the second portion in the drawing and aligned from left to right in the drawing. The fourth portion is composed of 10 working electrode groups $520_{31}$ to $520_{40}$, arranged beneath the third portion in the drawing and aligned from right to left in the drawing.

Each working electrode group $520_i$ (i = 1, ···, 40) has three working electrodes provided apart from one another. To the working electrodes, DNA probes having the identical DNA sequence are fixed. Each working electrode is, for example, formed with gold.

The counter electrode 522a has a U-shape. One end of the U-shape is disposed in the vicinity of the working electrode group $520_{10}$ of the first portion. The other end of the U-shape is disposed in the vicinity of the working electrode group $520_{11}$ of the second portion. The counter electrode 522b has a U-shape. One end of the U-shape is disposed in the vicinity of the working electrode group $520_{30}$ of the third portion. The other end of the U-shape is disposed in the vicinity of the working electrode group $520_{31}$ of the fourth portion.

The reference electrode 524 has a U-shape. One end of the U-shape is disposed in the vicinity of the working electrode group $520_{20}$ of the second portion. The other end of the U-shape is disposed in the vicinity of the working electrode group $520_{21}$ of the third portion.

To the substrate 510, terminals W electrically connected to respective working electrodes of each working electrode group $520_i$ (i = 1, ···, 40) is provided. With these terminals W, a current probe 186 is made contact.

Moreover, to the substrate 510, C terminals 523a and 523b, R terminals 525a and 525b, an X terminal 526, Y terminals 528a and 528b, and a plurality of conduction detection terminals 58 are provided further. The C terminal 523a is electrically connected to the counter electrode 522a. The C terminal 523b is electrically connected to the counter electrode 522b. The R terminals 525a and 525b are each connected to the reference electrode 524. X terminals 526a and 526b are provided on both sides of the DNA chip 500, which are terminals for detecting whether the DNA chip 500 is in a conductive state by applying a voltage between the terminals 526a and 526b. Likewise, the Y terminals 528a and 528b are provided on both sides of the DNA chip 500, which are terminals for detecting whether the DNA chip 500 is in a conductive state by applying a voltage between the terminals 528a and 528b. A plurality of conduction detection terminals 580 are provided in association with the working electrodes of the working electrode groups $520_1$ to $520_{40}$, and each conduction detection terminal 580 is connected to the associated working electrode. By applying a voltage between each conduction detection terminal 580 and the terminal W electrically connected to the associated working electrode, it is detected whether the above-mentioned associated working electrode and the above-mentioned terminal W are in a conductive state therebetween. The above-mentioned terminals are, as shown in FIG. 6, provided in groups above and below in the drawing, to have the working electrode group $520_i$ (i =1, ···, 40) therebetween.

The DNA chip 500 is attached to the nucleic acid inspection card 700. When attached, a flow passage is formed on the first portion so that a reagent containing an intercalating agent flows from the working electrode group $520_1$ to the working electrode $520_{10}$. Also on the counter electrode 522a, a flow passage is formed so that the reagent flows from the working electrode group $520_{10}$ to the working electrode $520_{11}$. A flow passage is formed on the second portion so that the reagent flows from the working electrode group $520_{11}$ to the working electrode $520_{20}$. Also on the reference electrode 524, a flow passage is formed so that the reagent flows from the working electrode group $520_{20}$ to the working electrode $520_{21}$. A flow passage is formed on the third portion so that the reagent flows from the working electrode group $520_{21}$ to the working electrode $520_{30}$. Also on the counter electrode 522b, a flow passage is formed so that the reagent flows from the working electrode group $520_{30}$ to the working electrode $520_{31}$. A flow passage is formed on the fourth portion so that the reagent flows from the working electrode $520_{31}$ to the working electrode $520_{40}$. The flow passages are formed with an area of the DNA chip 500 where the first to fourth portions of the working electrode group $520_i$, the counter electrode, and the reference electrode are formed, and the upper cover for coving these areas. As the upper cover, for example, a packing of the base sequence detection apparatus is used.

The reagent containing the intercalating agent passes through the flow passage on the first portion, the flow passage on the counter electrode 522a, the flow passage on the second portion, the flow passage on the reference electrode 524, the flow passage on the third portion, the flow passage on the counter electrode 522b, and the flow passage on the fourth portion, in this order.

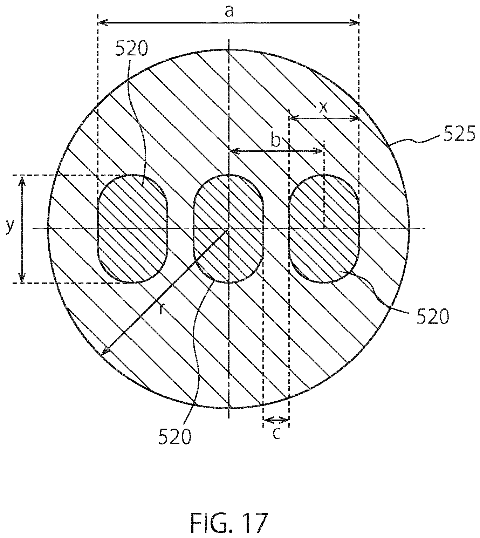

One example of three working electrodes in each working electrode group $520_i$ (i = 1, ···, 40) of the DNA chip 500 according to the present embodiment is shown in FIG. 17. Each working electrode 520 has a shape of a race track, having semicircles each connected to a pair of facing sides of a rectangular. The three working electrodes 520 may have an oval shape. To the three working electrodes 520, DNA probes having the identical DNA sequence are fixed, respectively. These DNA probes are fixed on the respective working electrodes 520 by dropping a liquid containing the above-mentioned identical DNA sequence onto a working electrode group including the three working electrodes 520. Then, a spot 525 of the above-mentioned liquid is formed in the area that includes the three working electrodes 520. The number of working electrodes in each working electrode group is preferably an odd number. This is because, to the working electrodes in each working electrode group, the DNA probes having the identical sequence are fixed and the presence of an oxidation current detected from each working electrode is decided by majority.

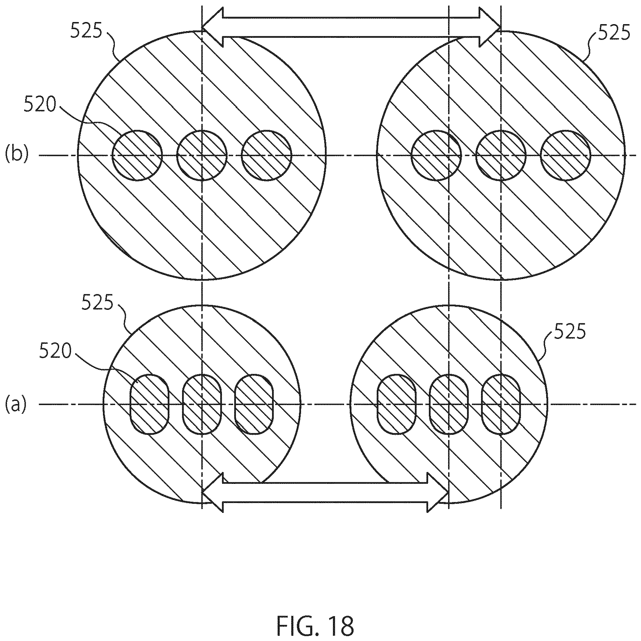

The above-mentioned three working electrodes are arranged in parallel in the direction in which the reagent containing the intercalating agent flows, that is the direction from left to right in FIG. 17. Each working electrode 520 has a shape with a short axis in the direction in which the reagent flows and a long axis in the direction orthogonal to the direction in which the reagent flows. Having such shape and arrangement, compared to the case where each working electrode 520 has the shape of circle in a comparison example shown in FIG. 18(b), it is possible to have a spot 525 with a small diameter and a short center-to-center distance between spots 525 next to each other, in the present embodiment shown in FIG. 18(a). With this arrangement, a larger number of working electrode groups can be aligned on the DNA chip 500, so that it is possible to increase number of detectable genes.

Moreover, in order to arrange a larger number of working electrode groups on the DNA chip 500, it is desirable to satisfy the following conditions (1) and (4). The total width of three working electrodes 520 is denoted as a, the short-axis width and the long-axis width of each working electrode 520 are denoted as x and y, respectively, the center-to-center distance and the shortest distance between the working electrodes next to each other among the three working electrodes 520 are denoted as b and c, respectively, and the radius of each spot 525 is denoted as r.

In the present embodiment, it is desirable that the total width a of the three working electrodes 520 is 90% or less of the diameter of each spot 525. That is, it is desirable to satisfy the condition

$$a < 1.8r \qquad (1).$$

This condition is a condition for the three working electrodes 520 to be arranged in the spot 525.

Moreover, it is desirable to satisfy the condition

$$x < y < 2x \qquad (2).$$

Furthermore, it is desirable to satisfy the condition

$$b = x + c \qquad (3).$$

Moreover, it is desirable to satisfy the condition

$$c = 0.5(a - 3x) < 0.5(1.8 - 3x) \qquad (4).$$

Nevertheless, c is larger than the minimum processing dimensions in lithography in patterning each working electrode 520, for example, c > 10 nm. The condition (4) is a condition for the three working electrodes 520 not to be overlap with one another.

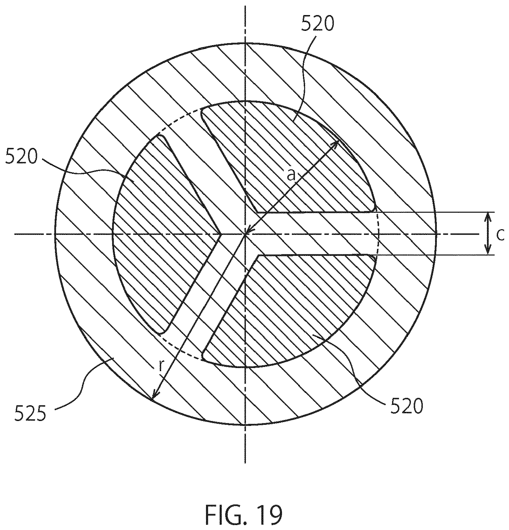

Subsequently, another example of three working electrodes in each working electrode group $520_i$ (i = 1, ···, 40) of the DNA chip 500 of the present embodiment is shown in FIG. 19. In the other example, three working electrodes 520 have a fan-like shape arranged in concentric with one another. Moreover, the three working electrodes 520 are arranged in such a manner that the center of each working electrode is located on the vertex of an equilateral triangle. One of the vertexes of the equilateral triangle is located on the lateral axis of the spot 525 on the side where a reagent containing an intercalating agent flows into the left side in FIG. 19.

As described above, by forming the three working electrodes 520 to have a fan-like shape and arranging the three working electrodes 520 in such a manner that the center of each working electrode is located on the vertex of the equilateral triangle, it is possible to have a smaller diameter of the spot 525 and a shorter center-to-center distance between the working electrodes 520 next to each other. Accordingly, a larger number of working electrode groups can be arranged on the DNA chip 500, so that it is possible to increase the number of detectable genes.

Furthermore, in order to arrange a larger number of working electrode groups on the DNA chip 500, it is desirable to satisfy the following conditions (5) to (6). The maximum radius of the three working electrodes 520 is denoted as a, the shortest distance between the working electrodes next to each other among the three working electrodes 520 is denoted as c, and the radius of the spot 525 is denoted as r.

In the other example shown in FIG.19, it is desirable that the maximum radius a of the three working electrodes 520 is 90% or less of the radius of the spot 525. That is, it is desirable to satisfy the condition

$$a < 0.9r \qquad (5).$$

This condition is a condition for the three working electrodes 520 to be arranged in the spot 525.

Moreover, it is desirable to satisfy the condition

$$c < 2a \qquad (6)$$

Nevertheless, c is larger than the minimum processing dimensions in lithography in patterning each working electrode 520, for example, c > 10 nm.

As explained above, according to the present embodiment, even using a smaller substrate, it is possible to increase the number of working electrodes. By fixing DNA probes having different DNA sequences to the respective working electrode groups, it is possible to increase the number of detectable genes.

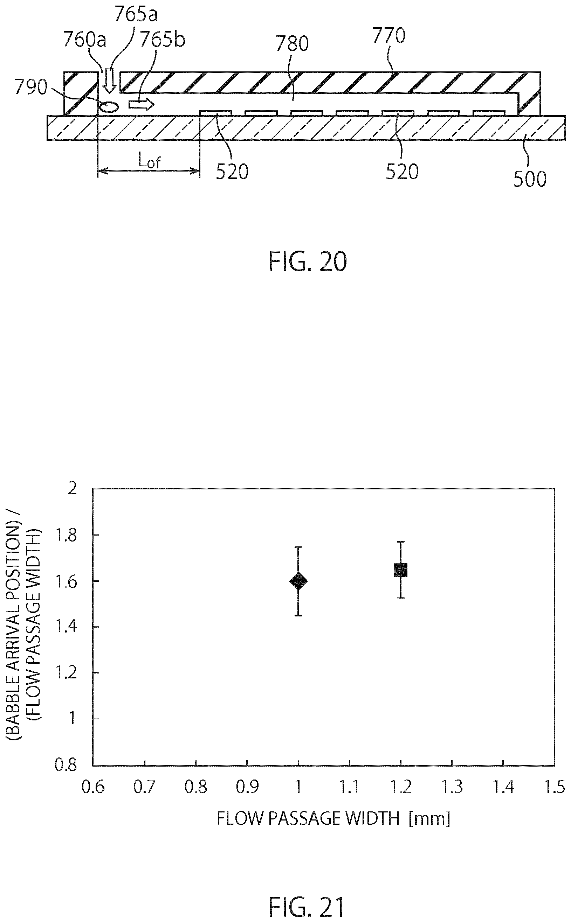

Detection of a DNA sequence is performed by making a reagent containing an intercalating agent flow into a detection flow passage formed on the DNA chip 500. When the reagent flows, if there is a babble on an electrode, accurate current detection cannot be performed, so that it is difficult to accurately detect the DNA sequence. The inventors of the present invention diligently studied the cause of generation of the bubble in a flow passage on an electrode of the DNA chip 500. As a result, the following are found. The inlet of the DNA chip 500 to which the reagent flows into is formed on an upper cover 770 in an almost vertical direction to the DNA chip 500, as shown in FIG. 20. Because of this, the reagent flows, as shown by an arrow 765a, from an inlet 760a toward into the DNA chip 500 in a vertically downward direction. Therefore, stagnation 790 is generated in an area of a flow passage 780 just under the inlet, a babble is generated by the stagnation, and this babble reaches an area over an electrode 520 through a flow passage 780, as shown by an arrow 765b.

The inventors conducted an experiment to study how much distance the babble is sent from the area just under the inlet into the flow passage. The result is shown in FIG. 21. As understood from FIG. 21, when the flow passage width is 1 mm, the babble arrival position is 1. 6 times the flow passage width, and when the flow passage width is 1. 2 mm, the babble arrival position is 1. 64 times the flow passage width. According to the result, it is found that babble is not sent to an area that is apart by two times or more the width of the flow passage 780.

Based on the result, in the DNA chip 500 of the first embodiment, the electrode closest to the inlet into which the reagent flows is disposed apart from the inlet 760a by a distance two times or more the width of the flow passage 780. That is, a distance Lof from the inlet 760a to the closest electrode is set at two times or more the width of the flow passage 780. Moreover, it is found according to the result of experiment that the distance Lof is preferably two to three times the width of the flow passage 780.

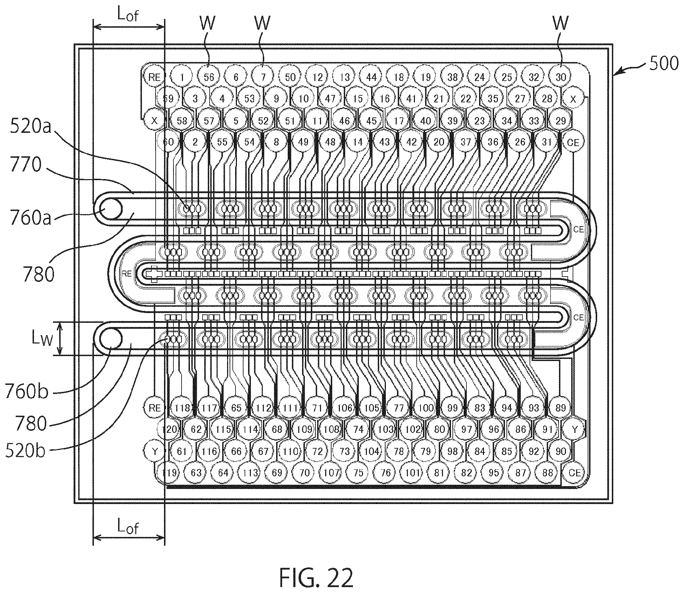

The DNA chip 500 having the flow passage 780 formed with the upper cover 770 is shown in FIG. 22. The distance Lof from the inlet 760a into which the reagent flows to a working electrode 520a in the flow passage 780, the working electrode 520a being closest to the inlet 760a, is two times or more a width Lw of the flow passage 780. Moreover, in the present embodiment, the same arrangement as the inlet side is made to an outlet 760b side through which the reagent flows out from the DNA chip 500. Accordingly, a working electrode 520b closest to the outlet 760b, is disposed apart from the outlet 760b by two times or more the distance Lw of the flow passage 780.

According to above, the DNA chip 500 of the present embodiment can restrict the transfer of a babble to the flow passage on an electrode.

(Configuration and Operation of Nucleic Acid Inspection Apparatus)

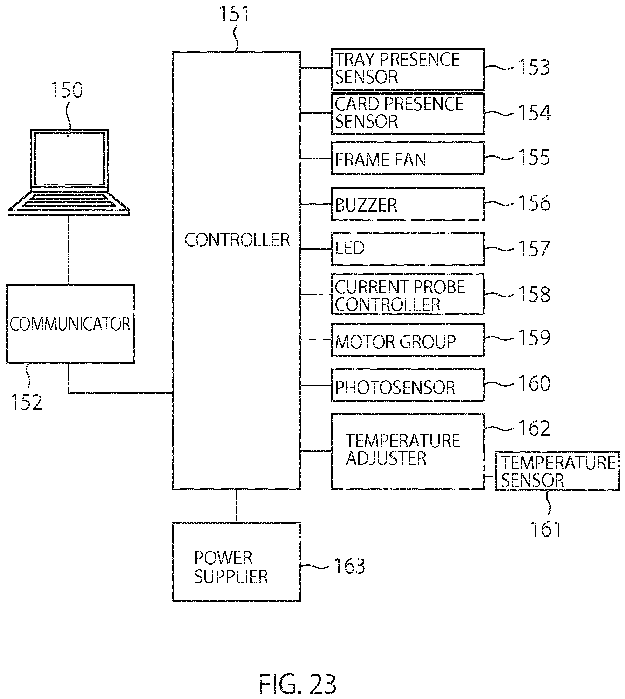

FIG. 23 is a block diagram of a control system of the nucleic acid inspection apparatus 110 according to the present embodiment. As shown in FIG. 23, the control system of the nucleic acid inspection apparatus 110 is provided with a controller 151, a communicator 152, a tray presence sensor 153, a card presence sensor 154, a frame fan 155, a buzzer 156, an LED 157, a current probe controller 158, a motor group 159, a photosensor 160, a temperature sensor 161, a temperature adjuster 162, and a power supplier 163.

The communicator 152 performs data communication between the information processing apparatus 150 and the controller 151. For example, the communicator 152 receives information set in the GUI windows 201, 202, 203, and 204 displayed on the information processing apparatus 150 from the information processing apparatus 150 and transfers the information to the controller 151. Moreover, the communicator 152 transfers a detection result of a current flowing to the electrode of the DNA chip 500 from the controller 151 to the information processing apparatus 150 and transfers abnormality detected by the controller 151 from the controller 151 to the information processing apparatus 150. Although, as a communication interface of the communicator 152, for example, an USB can be used, the communication interface is not limited to any specific type. The communicator 152 is not always required to be wired, but may perform data communication wirelessly.

The tray presence sensor 153 detects opening/closing of the trays 111, 112, 113, and 114, and transfers its detection result to the controller 151. The tray presence sensor 153 detects opening/closing of the trays 111, 112, 113, and 114, for example, mechanically or optically.

The card presence sensor 154 detects whether the nucleic acid inspection card 700 is placed in the trays 111, 112, 113, and 114, and transfers its detection result to the controller 151. The detection of whether the nucleic acid inspection card 700 is placed in the trays 111, 112, 113, and 114, can be performed, for example, by a sensor that mechanically or optically detect the presence of the nucleic acid inspection card 700.

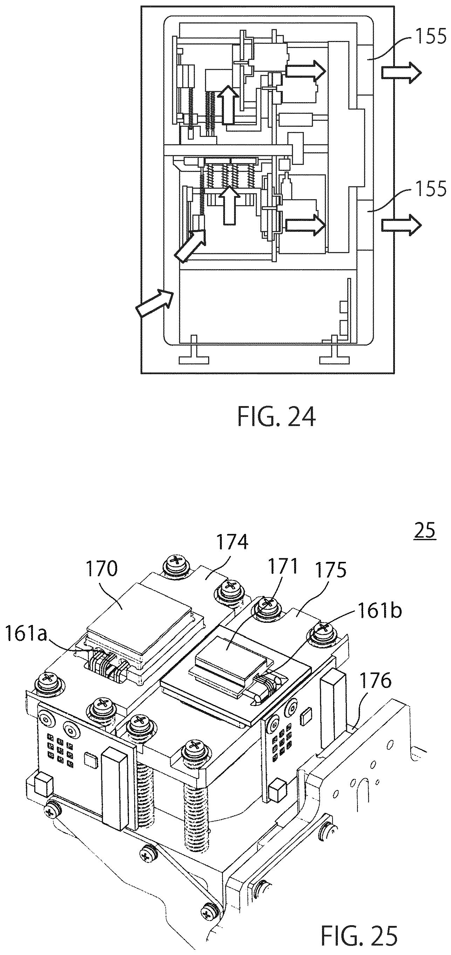

As shown in FIG. 24, for example, there are two frame fans 155 provided in the upward and downward directions on the rear side of the frame disposed in the vertical (upward and downward) direction from the installation surface. On the front side of the frame, an air flow inlet is provided. The rotation/stop of the frames fan 155 is controlled by the controller 151. When the controller 151 rotates the frame fans 155, the external air is taken in from the air flow inlet and circulated in the frame, and then taken out from the frame fans 155. In this way, the inside of the frame is cooled entirely. The number of the frame fans 155 and the installation location may be arbitrary changed depending on the frame size, shape, etc.

The buzzer 156 and the LED 157 are, for example, turned on when there is an abnormality in the nucleic acid inspection apparatus 110. Depending on the type of abnormality, the sound state of the buzzer 156 and the on-off state of the LED 157 may be changed. The on/off of the buzzer 156 and the LED 157 is performed by the controller 151.

The current probe controller 158 detects currents flowing into the current probes 186 that are made in contact with the electrodes of the DNA chip 500. Since the current flowing into each current probe 186 is small, the current probe controller 158 perform a process of removing a noise from the current flowing into each current probe 186, amplifying the current, and converting the amplified current into a voltage.

The motor group 159 has five motors 181, 182, 183, 184, and 185. Among the motors, the syringe-axis motor 184 controls the drive of syringe rods 201, 202, 203, and 204 that move liquids in the respective syringes to the flow passages. The NOV-axis motor 181 controls the drive of the NOV rod 24 that performs opening/closing of the NO valves 710a1 and 710a2. The NCV-axis motor 185 controls the drive of the NC rod 20 that performs opening/closing of the NO valves 710v1, 710v2, 710v3, and 710V4. The heater-Peltier-axis motor 183 controls the drive of a temperature adjustment supporter 25 on which a heater 170 and a Peltier device171 are mounted. The probe-axis motor 182 controls the drive of a probe holder 26 to which the current probe 186 is attached.

In the vicinity of the above-mentioned five motors 181, 182, 183, 184, and 185, photosensors 160 are provided respectively. The photosensor 160 associated with each motor optically detects the operation original position of each motor and returns each motor to the operation original positon.

As shown in FIG. 25, based on a temperature detection result of temperature sensors 161a and 161b provided in the vicinity of a heater 170 and a Peltier device 171, the temperature adjuster 162 separately controls the temperature of the heater 170 and the Peltier device 171. Apart from the temperature sensors 161a and 161b, a temperature sensor 161c for measuring the temperature in the frame is also provided. Based on the temperature inside the frame, the temperature adjuster 162 instructs the strength and on/off of the frame fans 155 to the controller 151.

The power supplier 163 generates a plurality of direct-current power supply voltages to be used in respective parts in the nucleic current acid inspection apparatus 110 and supplies the direct-current power supply voltages to the respective parts. The power supplier 163 has an AC/DC converter that generates a plurality of power supply voltages from a commercial power supply.

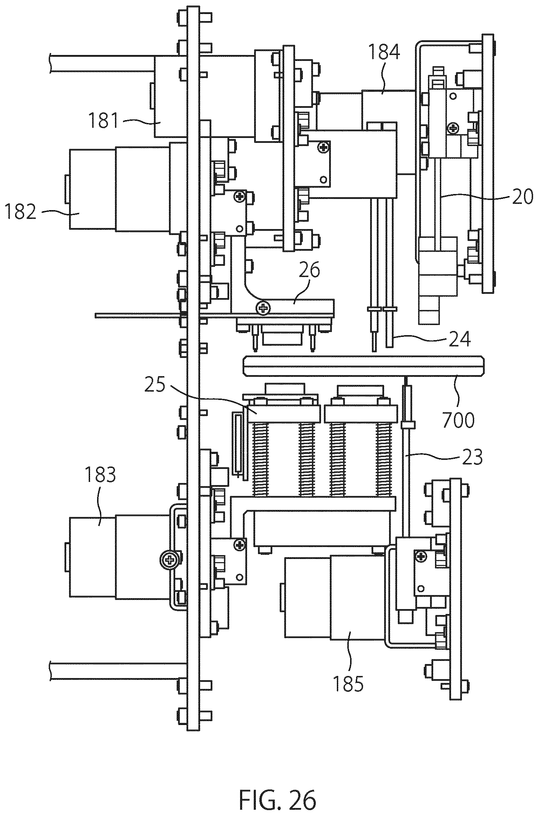

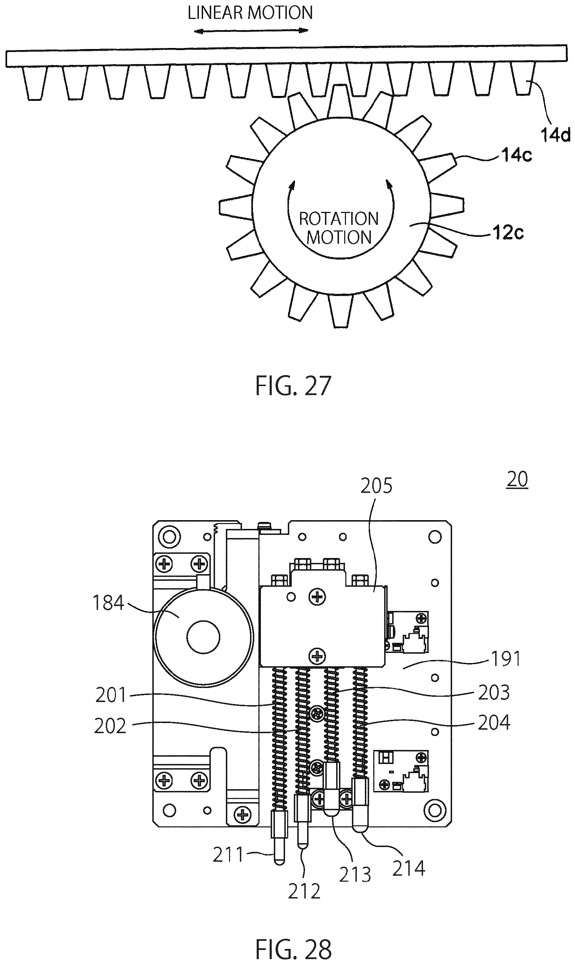

FIG. 26 is a plan view that shows the installation locations of the five motors 181, 182, 183, 184, and 185, and the syringe rod 20, the NCV rod 23, the NOV rod 24, the temperature adjustment supporter 25, and the probe holder 26, driven by the motors. FIG. 26 is a plan view viewed from the side face of the nucleic acid inspection apparatus 110, the shown right side and left side being a front face and rear face, respectively. As shown in FIG. 26, by a support plate 180 extending in the vertical (upward and downward) direction, the NOV-axis motor 181, the probe-axis motor 182, and the heater-Peltier-axis motor 183 are supported in order from above to below. Moreover, upwardly in the front side, a support plate 191 that supports the syringe-axis motor 184 is disposed in the vertical direction. Furthermore, downwardly in the front side, a support plate 192 that supports the NCV-axis motor 185 is disposed in the vertical direction. The rotation axes of these five motors are each arranged in the lateral direction. With a gear 14c of each rotation axis, a rack gear 14d as shown in FIG. 27 is engaged to convert the rotation of a rotation axis 12c into linear motion in the vertical direction, so that a rod associated with each motor moves in the vertical direction. Moreover, by switching the rotation direction of the rotation axis of each motor, the associated rod moves upward or downward.

FIG. 28 is a plan view showing the syringe rod 20 driven by the syringe-axis motor 184. The syringe rod 20 has four first rods 201, 202, 203, and 204 that are made in contact with the four syringes 710C1, 710C2, 710C3, and 710C4 in the nucleic acid inspection card 700. The four first rods 201, 202, 203, and 204 are extending from above to below in the frame. The top potions of the first rods have different heights. In more specifically, the top potion of the leftmost first rod 201 is located in the lowest position, subsequently, the top potion of the second leftmost first rod 201 is lower, subsequently, the top potion of the rightmost first rod 204 is low, and the top potion of the second rightmost first rod 203 is the highest. The four first rods 201, 202, 203, and 204 are supported by a common support plate 205. The support plate 205 moves vertically in accordance with the rotation of the rotation axis of the syringe-axis motor 184. Therefore, the four first rods 201, 202, 203, and 204 move vertically in synchronism with one another.

To the top potions of the four first rods 201, 202, 203, and 204, elastic punches 211, 212, 213, and 214 are attached, respectively.

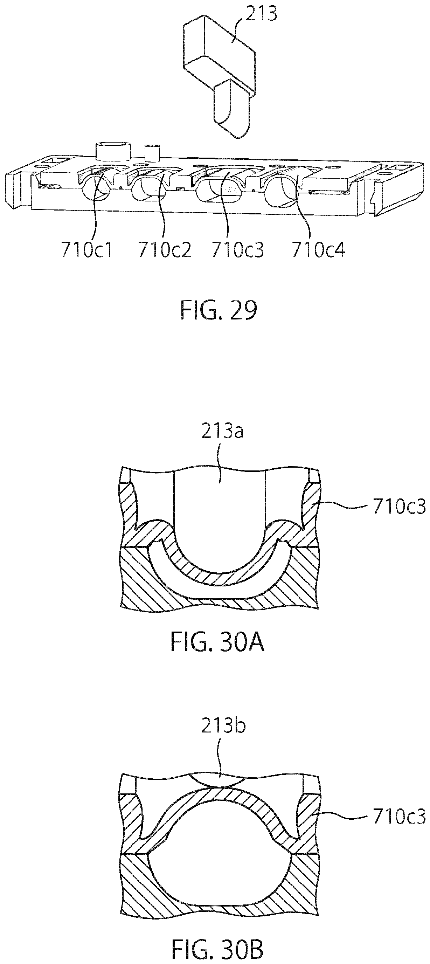

FIG. 29 is a perspective vies of the punch 213. The punch 213 has a slender shape so as to match the shape of each syringe. The punch 213 pushes down, from above, the dome-like packing 720 that constitutes the syringes 710C1, 710C2, 710C3, and 710C4, to push out the liquid in each syringe toward the associated flow passage.

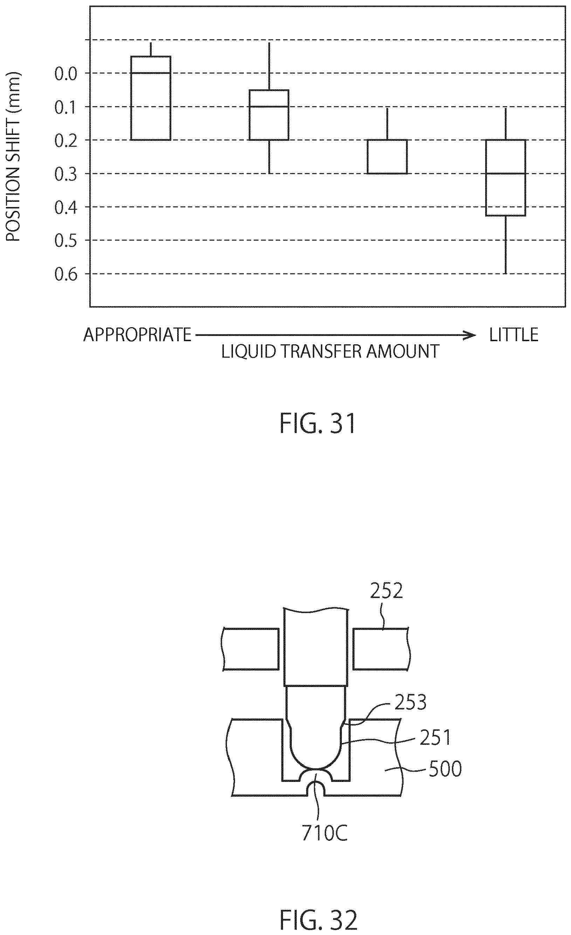

In order to decide the punch shape, the inventor prepared two types of punches having different widths and studied whether there is a liquid remnant in a syringe when the syringe is pushed with the punches. FIG. 30A shows an example of pushing the syringe 710c3 with a wide punch 213a and FIG. 30B shows an example of pushing the syringe 710c3 with a narrow punch 213b. FIG. 31 shows the liquid amount in the syringe 710c3 in the case of FIG.30A when the position at which the punch 213b pushes the syringe 710c3 is shifted, when the punch 213a is pushed to the syringe 710c3, the packing 720 of the syringe 710c3 is deformed into an M-shape as shown, so that a large slip load is generated between the packings, which causes the liquid remnant in the syringe. On the contrary, it is found that, in the case of FIG. 30B, since the contact area between the punch 213b and the syringe 710c3 is small, stress is concentrated on the center portion of the syringe 710c3, so that there is no liquid remnant in the syringe 710c3. In more specifically, it is found that it is desirable to make smaller the width of the punch in the lateral direction than the width of the syringe 710c3 in the lateral direction by 0. 3 mm or more.

Moreover, as shown in FIG. 31, when a location of the syringe 710C shifted from the center is pushed with the syringe rod 251, since the syringe 710C cannot be pushed sufficiently, an enough liquid transfer amount cannot be obtained. Accordingly, as shown in FIG. 32, the upper portion of the top portion of the syringe rod 251 that moves vertically along a rod guide 252, the upper portion being not contact with the nucleic acid inspection card 500, may be formed into a taper configuration 253, so that positioning with respect to the nucleic acid inspection card 700 can be made. According to this configuration, since the decrease in liquid transfer amount due to shift of the location where the syringe rod 251 pushes the syringe 710C can be avoided, an appropriate liquid transfer amount can be achieved.

The four first syringe rods 201, 202, 203, and 204 are made of an elastic material such as a spring, having the punches 211, 212, 213, and 214 at the top portion, respectively. The first rods are each, in a normal state, energized downwardly, and, as shown in FIG. 28, have different heights at their top portions. When the support plate goes down, the punch 211 of the first rod having the lowest top portion is pushed to the upper surface of the firstly associated syringe (710C1), so that the first rod 201 is contacted. The lower the support plate 205 goes down, the stronger the punch 211 pushes the syringe 710C1, so that the liquid in the syringe 710C1 is completely pushed out to the associated flow passage.

Since the heights of the top portions of the four first rods 201, 202, 203, and 204 are different from one another, firstly, the leftmost first rod 201 is contact with the syringe 710C1, subsequently, the second leftmost first rod 202 is contact with the syringe 710C2, subsequently, the rightmost first rod 204 is contact with the syringe 710C4, and finally, the second rightmost first rod 203 is contact with the syringe 710C3. In order of contact with the upper surfaces of the syringes by the punch, the liquids in the syringes are pushed out from the syringes to the associated flow passages.

As described above, in the nucleic acid inspection card 700 of the present embodiment, it is required to move the specimen sample, the first cleaning solution, the second cleaning solution, and the intercalating agent in this order, from the syringes 710C1, 710C2, 710C3, and 710C4 to the associated flow passages, respectively. Therefore, in FIG. 28, in accordance with the order of sending the liquids from the syringes 710C1, 710C2, 710C3, and 710C4 to the associated flow passages, respectively, the heights of the top portions of the four first rods are different from one another. Therefore, by moving the support plate from above to below just once, the liquids in the syringes 710C1, 710C2, 710C3, and 710C4 can be moved to the respective flow passages in a predetermined order, so that syringe rod drive control is made easy.

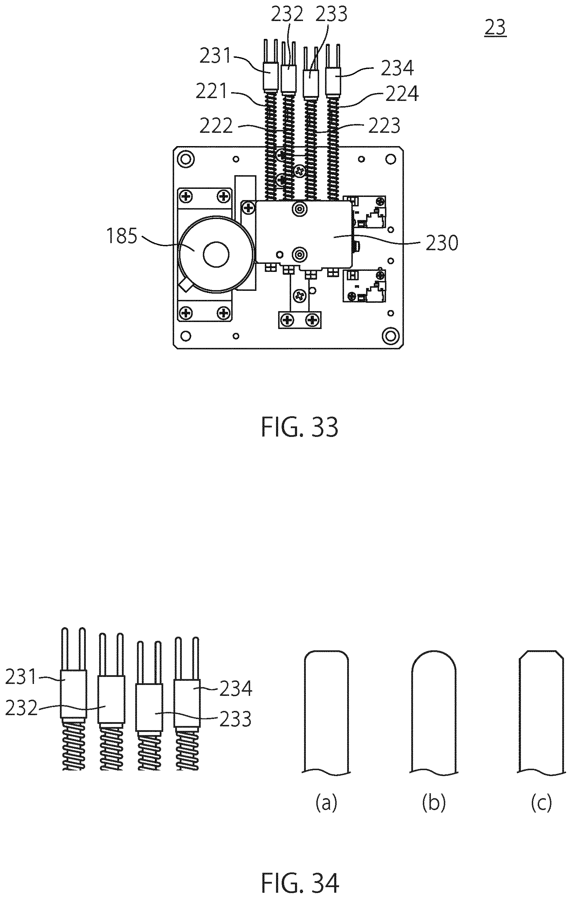

FIG. 33 is a plan view showing the NCV rod 23 driven by the NCV-axis motor 184. The NCV rod 23 has four second rods 221, 222, 223, and 224 that opens/closes the four NC valves 710v1, 710v2, 710v3, and 710V4 in the nucleic acid inspection card 700. The four second rods extend from below to above in the frame, having the fork portions 231, 232, 233, and 234 that fork into two, at the top side of the second rods 221, 222, 223, and 224, respectively. The fork portions 231, 232, 233, and 234 of the four second rods have different heights in such a manner that the height is lowered in descending order from the leftmost 221 to the second leftmost 222, the rightmost 224, and the second rightmost 223.

The tips of the fork portions 231, 232, 233, and 234 of the second rods preferably have a curved-shape (R-surface shape) such as shown in FIGS. 34(a) or 34(b), or a tapered shape (C-surface shape) such as shown in FIG. 34C. Having such a tip shape, even if their positions are shifted a little bit with respect to the positions of the respective NC valves in the nucleic acid inspection card 700, each NC valve can be opened/closed.

NC valves 710v1, 710v2, 710v3, and 710V4 have, as explained with reference to FIG. 11, the configuration of a cantilever. The top portion of the cantilever is energized in the direction of closing the flow passage. The fork portions 231, 232, 233, and 234 at top portion side of the second rods raise the top portions of the cantilevers from both sides to open the flow passages.

The four second rods 221, 222, 223, and 224 are supported by a common support plate 230. The support plate 230 moves vertically in accordance with the rotation of the NCV-axis motor 184. Therefore, the four second rods 221, 222, 223, and 224 move vertically in synchronism one another. Since the second rods 221, 222, 223, and 224 move from below to above, the fork portions 231, 232, 233, and 234 of the second rods are made in contact with the cantilevers of the associated NC valves 710v1, 710v2, 710v3, and 710V4 from below to raise the cantilevers upward to open the NC valves 710v1, 710v2, 710v3, and 710V4. The second rods move from above to below and when the second rods are not in contact with the NC valves 710v1, 710v2, 710v3, and 710V4, the NC valves return to their original closed state.

The four second rods 221, 222, 223, and 224 are made of an elastic member such as a spring. When their top portions are made in contact with the NC valves 710v1, 710v2, 710v3, and 710V4, the second rods 221, 222, 223, and 224 are contracted, so that their top portions leave the NC valves 710v1, 710v2, 710v3, and 710V4, to return to their initial positons shown in FIG. 33.

When the NCV-axis motor 184 rotates to move the support plate 230 upward, firstly, the leftmost second rod 221 opens the associated NC valve 710v1, so that the specimen sample flows into the amplification flow passage 710f. When the support plate 230 goes up further, the second leftmost second rod 222 opens the associated NC valve 710v2, so that the first cleaning solution flows into the amplification flow passage 710f. Moreover, when the support plate 230 goes up further, the rightmost second rod 224 opens the associated NC valve 710V4, so that the second cleaning solution passes through the flow passage and flows into the inspection flow passage 712 on the DNA chip 500. When the support plate 230 goes up further, the second rightmost second rod 223 opens the associated NC valve 710v3, so that the intercalating agent passes through the flow passage and flows into the inspection flow passage 712 on the DNA chip 500.

As described above, the four second rods 221, 222, 223, and 224 having the top portions with different heights move vertically while being supported by the common support plate 230. Therefore, by just one vertical movement of the support plate 230, the four the NC valves 710v1, 710v2, 710v3, and 710V4 can be opened in order, so that the liquids in the four syringes 710c1, 710c2, 710c3, and 710c4 can be moved to the associated flow passages in order.

Accordingly, the opening/closing control of the NC valves 710v1, 710v2, 710v3, and 710V4 can be performed easily.

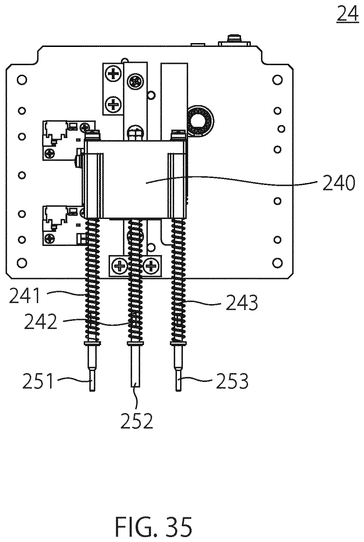

FIG. 35 is a plan view showing the NOV rod 24 driven by the NOV-axis motor 181. The NOV rod 24 has two third rods 241 and 243 for opening/closing the two NO valves 710a1 and 710a2 in the nucleic acid inspection card 700, and a third positioning rod 242. The three third rods 241, 242, and 243 extend along the frame from above to below. Among the three, the center third positioning rod 242 has a top portion little bit higher than the top portions of the remaining two rods 241 and 243.

These third rods 241, 242, and 243 are supported by a common support plate 240. The support plate 240 moves vertically in accordance with the rotation of the NOV-axis motor 181. Therefore, the three third rods 241, 242, and 243 move vertically in synchronism one another.

When the support plate 240 moves downward, Among the three, the center third rod 242 is firstly made contact with the upper surface of the nucleic acid inspection card 700 to perform positioning. The remaining two third rods 241 and 243 push down the tube structure of the packing 720 as shown in FIG. 6, to close the flow passages.

As shown in FIG. 35, although the top portion of the third positioning rod 242 is higher than the remaining two rods 241 and 243, since the two rods 241 and 243 are made in contact with the packing 720 located below the upper surface of the nucleic acid inspection card 700, before the two third rods 241 and 243, the third positioning rod 242 is made in contact with the upper surface of the nucleic acid inspection card 700 to perform positioning.

As explained with reference to FIG. 9, the two NO valves 710a1 and 710a2 are provided at the outlet and inlet of the amplification flow passage 710f on the nucleic acid inspection card 700. By closing the NO valves 710a1 and 710a2 with the third rods 241 and 243 at the same time, the liquid in the amplification flow passage 710f can be prevented from reverse flow to the syringes or flow to the DNA chip 500. In the present embodiment, while the NO valves 710a1 and 710a2 are being closed, the amplification flow passage 710f is heated to perform nucleic acid amplification.

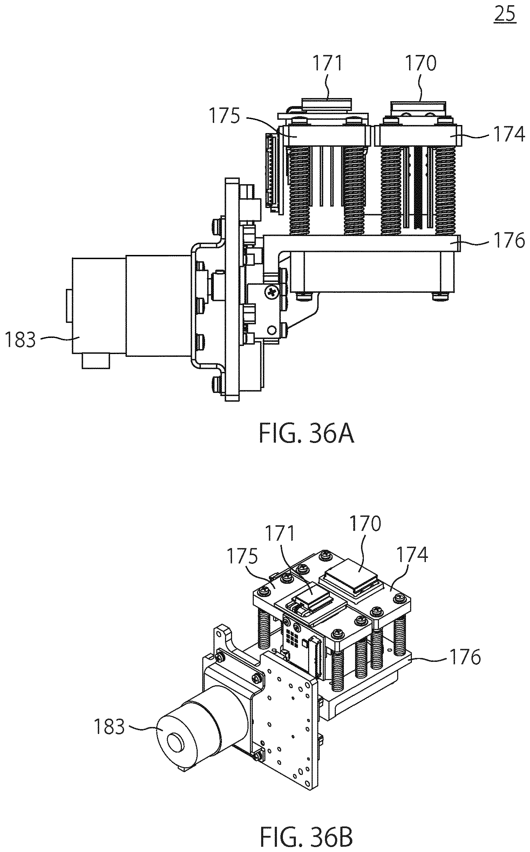

FIG. 36A is a plan view of the temperature adjustment supporter 25 driven by the heater-Peltier-axis motor 183. FIG. 36B is a perspective view of the temperature adjustment supporter 25. The temperature adjustment supporter 25 has a first support plate 174 for supporting the heater 170, a second support plate 175 for supporting the Peltier device 171, and an elastic member such as a spring disposed between the first and second support plates 174 and 175, and a third support plate 176. While the elastic member is not being energized, the first support plate 174 and the second support plate 175 are located at an almost same height. The third support plate 176 moves vertically by the rotation 183 of the heater-Peltier-axis motor and, and thus the first support plate 174 and the second support plate 175 synchronically move vertically.

The heater 170 disposed on the upper surface of the first support plate 174 has a rectangular shape. The Peltier device 171 disposed on the upper surface of the second support plate 175 also has a rectangular shape. When the third support plate 176 moves upward, the heater 170 is stored in one of the concave portions provided on the rear face side of the nucleic acid inspection card 700 and the Peltier device 171 is stored in the other concave portion. The concave portions provided on the rear face side of the nucleic acid inspection card 700 have a size that matches the external shape of the heater 170 and the Peltier device 171. By storing the heater 170 and the Peltier device 171 in these concave portions, precise positioning of the heater 170 and the Peltier device 171 is performed. The concave portion for the heater in the nucleic acid inspection card 700 is provided just under the amplification flow passage 710f. The concave portion for the Peltier device is provided just under the inspection flow passage 712 on the DNA chip 500. With this arrangement, the heater 170 can heat the amplification flow passage 710f and the Peltier device 171 can heat and cool the inspection flow passage 712.

As described above, although the heater 170 and the Peltier device 171 are made in contact with the nucleic acid inspection card 700 almost at the same time, the heat control of the heater 170 and the temperature adjustment control of the Peltier device 171 can be done separately. In the present embodiment, before starting nucleic acid amplification at the nucleic acid inspection card 700, the temperature adjustment supporter 25 goes up to make the heater 170 and the Peltier device 171 in contact with the nucleic acid inspection card 700 and, thereafter, the specimen sample in the syringe is moved to the amplification flow passage 710f to be subject to nucleic acid amplification while being heated by the heater. Thereafter, when the nucleic-acid amplified specimen sample moves to the inspection flow passage 712 on the DNA chip 500, the Peltier device heats and cools the inspection flow passage 712. The temperature adjustment supporter 25 is held upward until the probe is made contact with the DNA chip 500 to perform current detection.

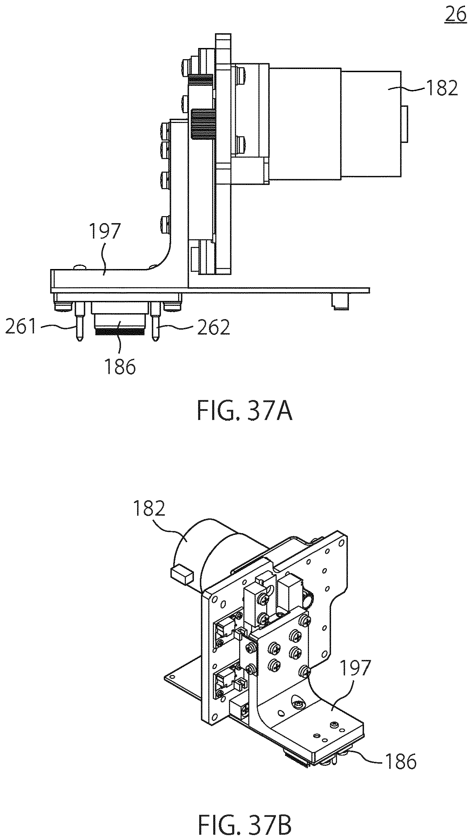

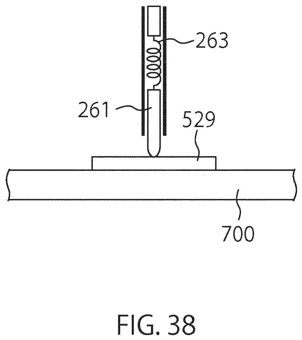

FIG. 37A is a plan view of the probe holder 26 driven by the probe-axis motor 182. FIG. 37B is a perspective view of the probe holder 26. The probe holder 26 is disposed above the nucleic acid inspection card 700. The probe holder 26 has a support plate 197 for supporting the current probe 186. The support plate 197 moves vertically in accordance with the rotation of the probe-axis motor 182. On the rear face side of the support plate 197, the current probe 186, and pins 261 and 262 for positioning the current probe 186 are provided. The current probe 186 has, as shown in FIG. 38, a built-in spring 263. When the pressure to push down the pins 261 and 262 is small, conductivity may not be taken due to contact resistance, however, by providing the spring 263, the pressure to push down the probe pins 261 and 262 becomes a push-down stress so as to have conductivity to the nucleic acid inspection card 700. Although the present embodiment has the configuration with the built-in spring 263, an elastic body other than the spring 263 can be adopted.

There are current probes 186 for the number of the electrodes on the DNA chip 500. On the support plate 197, a wiring pattern for detecting a current flowing through each current probe 186 is formed. When the probe-axis motor 182 is driven, the current probe 186 gradually moves downward and, firstly, the positioning pins 261 and 262 are engaged with hole portions on the nucleic acid inspection card 700 for positioning, thereafter, the current probe 186 is made contact with each electrode on the DNA chip 500. Since the positioning pins 261 and 262 perform positioning firstly, many current probes 186 are made in contact with the associated electrodes on the DNA chip 500 accurately.

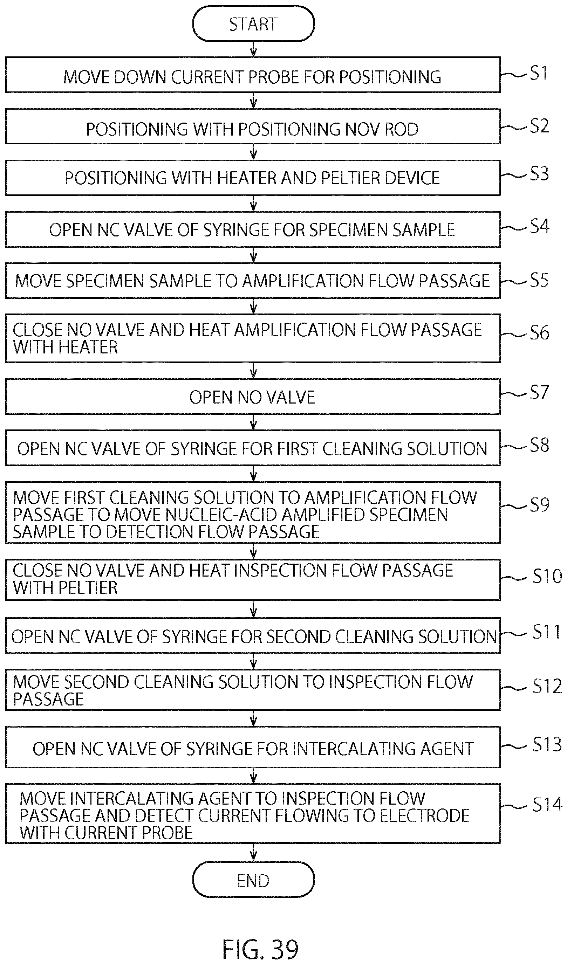

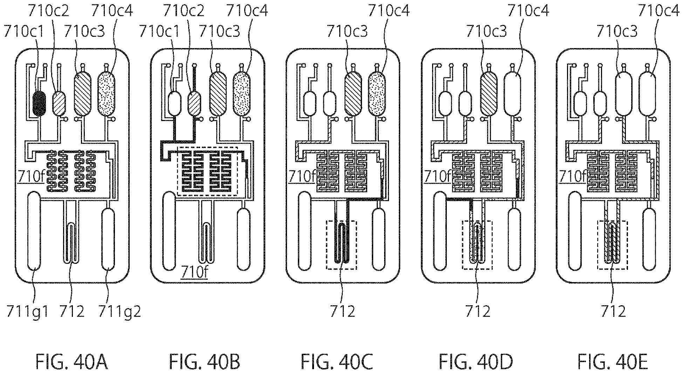

FIG. 39 is a flowchart showing an example of a drive sequence of each motor by the controller 151. FIG. 40 is a diagram showing a move state of a liquid on the nucleic acid inspection card 700. Hereinbelow, based on the drawings, the process of nucleic acid inspection will be explained.

The probe-axis motor 182 is driven to move down the probe holder 26. While the current probe 186 is being positioned, the current probe 186 is made contact with each electrode on the DNA chip 500 attached to the nucleic acid inspection card 700 (step S1).

The NOV-axis motor 181 is driven to make the third rod 242 for positioning the NOV rod 24 contact with the predetermined position of the nucleic acid inspection card 700 to perform positioning (step S2).

The heater-Peltier-axis motor 183 is driven to move up the temperature adjustment supporter 25 to store the heater 170 and the Peltier device 171 in the concave portions at the rear face side of the nucleic acid inspection card 700 to perform positioning (step S3). In this state, since the NC valves 710v1, 710v2, 710v3, and 710V4 are all closed, as shown in FIG. 40A, the liquids in the four syringes 710C1, 710C2, 710C3, and 710C4 do not flow into the flow passages.

The NC valve-axis motor 185 is driven to move up the NCV rod 23 to make the top portion of the second rod 221, the top portion of which has been located highest, raise the associated cantilever to open the NC valve 710v1 located at the outlet of the syringe for the specimen sample (step S4).

The syringe-axis motor 187 is driven to move down the syringe rod 20 to push the first rod 201, the top portion of which has been located lowest, to the upper surface of the syringe 710C1 for the specimen sample to push out the specimen sample to the flow passage (step S5). In this way, as shown in FIG. 40B, the specimen sample in the syringe 710C1 for the specimen sample passes through the flow passage and flows into the amplification flow passage 710f.

The NOV-axis motor 181 is driven to make the two third rods 241 and 243 of the NOV rod 24 contact with the packing 720 of the NO valve to close the NO valves 710a1 and 710a2, and the heater 170 heats the amplification flow passage 710f (step S6). By the heating, amplification of nucleic acid contained in the specimen sample is performed in the amplification flow passage 710f. When the amplification of nucleic acid is complete, the heater 170 stops heating. Since the heater 170 has no particular cooling function, natural cooling is performed.

The NOV-axis motor 181 is driven in the reverse direction of that in step S6 to open the NO valves 710a1 and 710a2 (step S7).

The NC valve-axis motor 185 is driven in the same direction as that in step S4, to move up further the NCV rod 23 to make the top portion of the second rod 222, the top portion of which has been located at the second highest position, to raise the associated cantilever to open the NC valve 710v2 located at the outlet of the syringe 710C2 for the first cleaning solution (step S8).

The syringe-axis motor 187 is driven in the same direction as that in step S5, to move down further the syringe rod 20 to push the first rod 202, the top portion of which has been located at the second lowest position, to the upper surface of the syringe 710C2 for the first cleaning solution, to push out the first cleaning solution to the amplification flow passage 710f (step S9). In this way, as shown in FIG. 40C, the first cleaning solution enters the amplification flow passage 710f and the nucleic-acid amplified specimen sample in the amplification flow passage 710f is pushed out to the detection flow passage in the DNA chip 500.

Like step S6, the NOV-axis motor 181 is driven to make the two third rods 241 and 243 of the NOV rod 24 contact again with the packing 720 of the NO valve to close the NO valves 710a1 and 710a2. In parallel with this, the Peltier device 171 heats the DNA chip 500 (step S10).

Subsequently, the NC valve-axis motor 185 is driven in the same direction as that in steps S4 and S8 to move up further the NCV rod 23 to make the top portion of the second rod 224, the top portion of which has been located at the third highest position, to raise the associated cantilever to open the NC valve 710v4 located at the outlet of the syringe 710C4 for the second cleaning solution (step S11).

Subsequently, the syringe-axis motor 184 is driven in the same direction as that in steps S5 and S9 to move down further the syringe rod 20 to push the first rod 204, the top portion of which has been located at the third lowest position, to the upper surface of the syringe 710C4 for the second cleaning solution, to push out the second cleaning solution to the flow passage connected to the DNA chip 500 (step S12). In this way, as shown in FIG. 40D, the second cleaning solution moves to the inspection flow passage 712 on the DNA chip 500 and specimen sample accumulated so far in the inspection flow passage 712 is pushed out to the waste liquid tanks 711g1 and 711g2.

Subsequently, the NC valve-axis motor 185 is driven in the same direction as that in steps S4, S8, and S11 to move up further the second rod to make the top portion of the second rod 223, the top portion thereof has been located at the lowest position, raise the associated cantilever to open the NC valve 710v3 located at the outlet of the syringe 710C3 for the intercalating agent (step S13).

Subsequently, the syringe-axis motor 187 is driven in the same direction as that in steps S5, S9, and S12 to move down further the syringe rod 20 to push the first rod 203, the top portion thereof has been located at the highest position, to the upper surface of the syringe 710C3 for the intercalating agent, to push out the intercalating agent to the flow passage connected to the DNA chip 500 (step S14). In this way, as shown in FIG. 40E, the intercalating agent moves to the inspection flow passage 712 on the DNA chip 500 and the second cleaning solution accumulated so far in the inspection flow passage 712 is pushed out to the waste liquid tank. Thereafter, the current probe 186 having contact with the electrode of the DNA chip 500 detects a current flowing into the electrode.

(Configuration and Operation of Nucleic Acid Inspection Apparatus)

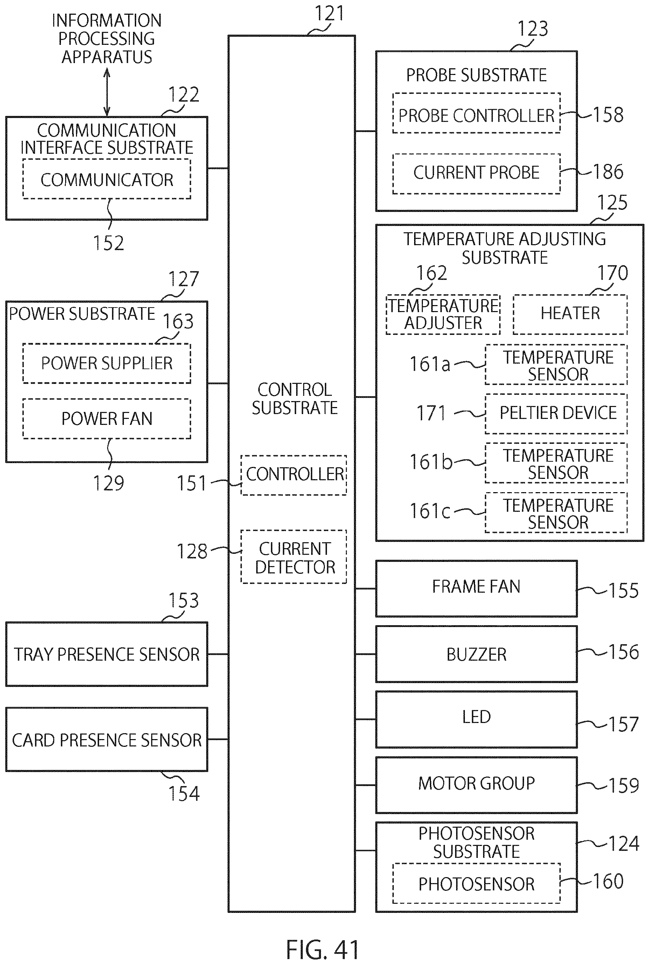

FIG. 41 is a block diagram of a control system of the nucleic acid inspection apparatus 110. As shown in FIG. 41, inside the nucleic acid inspection apparatus 110, a control substrate 121, a communication interface substrate 122, a probe substrate 123, a photosensor substrate 124, a temperature adjusting substrate 125, and a power substrate 127 are provided. It is not always required to divide into these substrates. For example, a plurality of substrates may be united into one substrate.

On the control substrate 121, a controller 151 and a current detector 128 are mounted. On the communication interface substrate 122, a communicator 152 having a USB (Universal Serial Bus) hub function is mounted. On the probe substrate 123, a plurality of current probes 186, a wiring pattern for transferring a current flowing through the current probe 186, and a probe controller 151 for amplifying the current of the current probe 186 to convert the amplified current into a voltage are provided. On the photosensor substrate 124, a photosensor 160 for detecting the operation original position of each of the motors 181 to 185 in the motor group (liquid transfer unit) 159 is mounted. On the temperature adjusting substrate 125, the heater (heating unit) 170 and the Peltier device (temperature adjuster) 171, the temperature sensor (temperature measuring unit) 161a for the heater 170, the temperature sensor (temperature measuring unit) 161b for the Peltier device 171, the temperature sensor (temperature measuring unit) 161c for measuring the temperature in the frame, and the temperature adjuster 162 for performing temperature adjustment of the heater 170 and the Peltier device 171 are mounted. On the power substrate 127, the power supplier 163 for generating a plurality of direct-current power supply voltages from a commercial power supply and a power fan 129 are mounted.

The controller 151 receives signals detected by the tray presence sensor 153, the card presence sensor 154, the photosensor 160, and the temperature sensors 161a, 161b, and 161c. In more specifically, the controller 151 detects opening/closing of the trays 111, 112, 113, and 114 of the nucleic acid inspection apparatus 110, using the tray presence sensor 153. Detection of opening/closing of the trays 111, 112, 113, and 114 can be done with a sensor that performs opening/closing of the trays 111, 112, 113, and 114, mechanically or optically. The controller 151 detects whether the nucleic acid inspection card 700 is placed in the trays 111, 112, 113, and 114, using the card presence sensor 154. The controller 151 detects the rotational positions of the motors 181 to 185 of the motor group 159, using the photosensor 160. Moreover, the controller 151 detects the temperature inside the frame, the temperature of the heater 170, and the temperature of the Peltier device 171, using the temperature sensors 161a, 161b, and 161c.

The controller 151 controls the frame fan (ventilator) 155, the buzzer 156, the LED157, and the motor group 159.

As shown in FIG. 24, for example, there are two frame fans 155 provided in the upward and downward directions on the rear face side of the frame disposed in the vertical (upward and downward) direction from the installation surface. The frame fan 155 takes external air into the frame, circulates the taken external air inside the frame and takes out the air to the outside of the frame. On the front-face lower side of the frame, an air flow inlet is provided. The rotation/stop of the frames fan 155 is controlled by the controller 151. When the controller 151 rotates the frame fans 155, the external air is taken from the air flow inlet and circulated in the frame, and then taken out from the frame fans 155. In this way, the inside of the frame is cooled entirely. The number of the frame fans 155 and the installation location may be arbitrary changed depending on the frame size, shape, etc.

The buzzer 156 and the LED 157 are, for example, turned on when there is an abnormality in the nucleic acid inspection apparatus 110. Depending on the type of abnormality, the sound state of the buzzer 156 and the on-off state of the LED 157 may be changed. The on/off of the buzzer 156 and the LED 157 is performed by the controller 151.

The current probe controller 158 detects currents flowing into the current probes 186 that are made in contact with the electrodes of the DNA chip 500. Since the current flowing into each current probe 186 is small, the current probe controller 158 perform a process of removing a noise from the current flowing into each current probe 186, amplifying the current, and converting the amplified current into a voltage.

As shown in FIG. 26, the motor group 159 has five motors 181 to 185. FIG. 26 is a plan view that shows the installation locations of the five motors 181 to 185, the syringe rod 20, the NCV rod 23, the NOV rod 24, the temperature adjustment supporter 25, and the probe holder 26, driven by these motors. FIG. 26 is a plan view viewed from the side face of the nucleic acid inspection apparatus 110, the shown right side and left side being a front face and rear face, respectively.

Among the five motors 181 to 185, the syringe-axis motor 184 controls driving of the syringe rods 201 to 204 each for moving the liquid in each syringe to the flow passage. The NOV-axis motor 181 controls driving of the NOV rod 24 for opening/closing the NO valves 710a1 and 710a2. The NCV-axis motor 185 controls driving of the NC rod 20 for opening/closing the NC valve (NVC). The heater-Peltier-axis motor 183 controls driving of the temperature adjustment supporter 25 on which the heater 170 and the Peltier device 171 are mounted. The probe-axis motor 182 controls driving of the probe holder 26 to which the current probe 186 is attached.

As shown in FIG. 26, by a support plate 180 extending in the vertical (upward and downward) direction, the NOV-axis motor 181, the probe-axis motor 182, and the heater-Peltier-axis motor 183 are supported in order from above to below. Moreover, upwardly in the front side, the support plate 191 that supports the syringe-axis motor 184 is disposed in the vertical direction. Furthermore, downwardly in the front side, the support plate 192 that supports the NCV-axis motor 185 is disposed in the vertical direction. The rotation axes of these five motors are each arranged in the lateral direction. With a gear of each rotation axis, a rack gear is engaged to convert the rotation of a rotation axis 12c into linear motion in the vertical direction, so that a rod associated with each of the motors 181 to 185 moves in the vertical direction. Moreover, by switching the rotation direction of the rotation axis of each of the motors 181 to 185, the associated rod moves upwardly or downwardly.

In the vicinity of the above-mentioned five motors 181, 182, 183, 184, and 185, photosensors 160 are provided respectively. The photosensor 160 associated with each of the motors 181 to 185 optically detects the operation original positon of each of the motors 181 to 185 and returns each of the motors 181 to 185 to the operation original positon.

The current detector 128 shown in FIG. 41 detects a current flowing to the current probe 186. The current flowing to the current probe 186 is converted into a voltage on the probe substrate 123 and then sent to the current detector 128. The current detector 128 detects a voltage in accordance with the current flowing to the current probe 186 while offset correction and circuit noise removal are being performed.

As shown in FIG. 25, based on a temperature detection result of the temperature sensors 161a and 161b provided in the vicinity of the heater 170 and the Peltier device 171, the temperature adjuster 162 separately controls the temperature of the heater 170 and the Peltier device 171. Apart from the temperature sensors 161a and 161b, the temperature sensor 161c for measuring the temperature in the frame is also provided. Based on the temperature inside the frame, the temperature adjuster 162 instructs the strength and on/off of the frame fans 155 to the controller 151.

The power supplier 163 generates a plurality of direct-current power supply voltages to be used in respective parts in the nucleic current acid inspection apparatus 110 and supplies the direct-current power supply voltages to the respective parts. The power supplier 163 has an AC/DC converter that generates a plurality of power supply voltages from a commercial power supply.

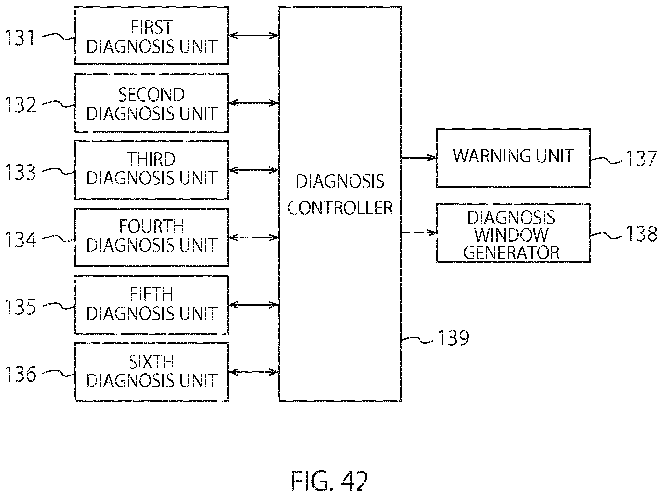

FIG. 42 is a functional block diagram related to self-diagnosis of the information processing apparatus 150 according to the present embodiment. The information processing apparatus 150 of FIG. 42 has first to sixth diagnosis units 131 to 136, a warning unit 137, a diagnosis window generator 138, and a diagnosis controller 139. The first to sixth diagnosis units 131 to 136 automatically perform self-diagnosis when the nucleic acid inspection apparatus 110 is turned on. The first to sixth diagnosis units 131 to 136 can perform self-diagnosis at any timing arbitrarily selected by the diagnosis window generator 138.

The first diagnosis unit 131 performs communication confirmation with the controller 151 and the current detector 128 in the nucleic acid inspection apparatus 110. In more specifically, the first diagnosis unit 131 transmits predetermined signals from the information processing apparatus 150 to the controller 151 and the current detector 128, respectively, to perform communication confirmation by determining whether response signals to these signals have been returned from the controller 151 and the current detector 128, respectively, within a predetermined period. As shown in FIG. 41, the information processing apparatus 150 perform information transmission and reception with the nucleic acid inspection apparatus 110 via the communication interface substrate 122 in the nucleic acid inspection apparatus 110, for example, in accordance with USB standards.

The second diagnosis unit 132 performs operation confirmation of a plurality of motors. The second diagnosis unit 132 performs operation confirmation of the motors 181 to 185 using the photosensor 160 provided at the operation original position of each of the motors 181 to 185. That is, by rotating each of the motors 181 to 185 in a normal direction from the operation original position and then in a reverse direction, it is determined with the photosensor 160 whether each of the motors 181 to 185 returns to the operation original position. If each motor returns to the operation original position, it is determined that the operation is normal. If each motor returns a position shifted from the operation original position, it is determined that the operation is abnormal.

The third diagnosis unit 133 performs operation confirmation of the heater 170 and the Peltier device 171. In more specifically, the third diagnosis unit 133 performs heating for a predetermined period with the heater 170 and the Peltier device 171 and measures the temperature increase with the temperature sensors 161a and 161b provided in the vicinity of the heater 170 and the Peltier device 171, respectively. Then, it is determined that the operation is normal if a temperature increase value per unit of time is within a predetermined range and determined that the operation is abnormal if the temperature increase value is out of the predetermined range.

The fourth diagnosis unit 134 performs operation confirmation of the fans. Inside the nucleic acid inspection apparatus 110, the frame fan 155 and the power fan 129 are provided. While the frame fan 155 and the power fan 129 are rotating, the fourth diagnosis unit 134 detects signals output from the frame fan 155 and the power fan 129. The signals output from the frame fan 155 and the power fan 129 are signals that have a predetermined logic while the frame fan 155 and the power fan 129 are rotating. The fourth diagnosis unit 134 determines that the operation is normal if the above-mentioned signals have the predetermined logic and determines that the operation is abnormal if the above-mentioned signals have another logic.

The fifth diagnosis unit 135 performs operation confirmation of the current detector 128. The current detector 128 determines, after offset adjustments, whether a current flowing through the electrode on the inspection flow passage 712 becomes zero amperes in the state where the specimen sample is not injected into inspection flow passage 712 of the DNA chip 500 attached to the nucleic acid inspection card 700.

The sixth diagnosis unit 136 determines whether the temperature in the frame of the nucleic acid inspection apparatus 110 is within a predetermined temperature range. The sixth diagnosis unit 136 acquires a temperature measured by the temperature sensor 161c provided in a specific location in the frame (for example, on a relay substrate 126) to determine that the temperature is normal if the temperature is within the predetermined temperature range and abnormal if the temperature is out of the predetermined temperature range.

The warning unit 137 performs a warning process if at least one of the first to sixth diagnosis units 131 to 136 determines abnormal. The warning process is, for example, to display an abnormal location on the display screen of the information processing apparatus 150. In this occasion, in order to get operator' attention, the abnormal location may be displayed with a striking color or with flashing. Or the warning process may give off a warning sound in at least either one of the nucleic acid inspection apparatus 110 and the information processing apparatus 150. The actual contents of the warning process performed by the warning unit 137 may be arbitrarily changed. For example, if abnormality does not affect nucleic acid inspection, the nucleic acid inspection may be continuously performed and if the abnormality affects the nucleic acid inspection, the abnormal location may be noticed to urge a user to inspect and repair and forcibly shut down the nucleic acid inspection apparatus 110, so as not to perform unreliable nucleic acid inspection.

The diagnosis controller 139 instructs the above-described first to sixth diagnosis units 131 to 136 to perform self-diagnosis when the nucleic acid inspection system 100 is turned on. There is no particular order of diagnosis performed by the first to sixth diagnosis units 131 to 136. Depending on the situation, at least part of the self-diagnosis by the first to sixth diagnosis units 131 to 136 may be performed in parallel.

Moreover, the diagnosis controller 139 may let a user select a diagnosis unit among the first to sixth diagnosis units 131 to 136 and make the user-selected diagnosis unit perform self-diagnosis at an arbitrary timing.

The diagnosis window generator 138 generates a diagnosis window to be displayed on the display screen of the information processing apparatus 150. On the diagnosis window, results of self-diagnosis by the first to sixth diagnosis units 131 to 136 automatically performed at power-on are displayed. Moreover, on the diagnosis window, buttons with which a user arbitrarily selects a self-diagnosis item, a button for starting self-diagnosis, etc. are provided.

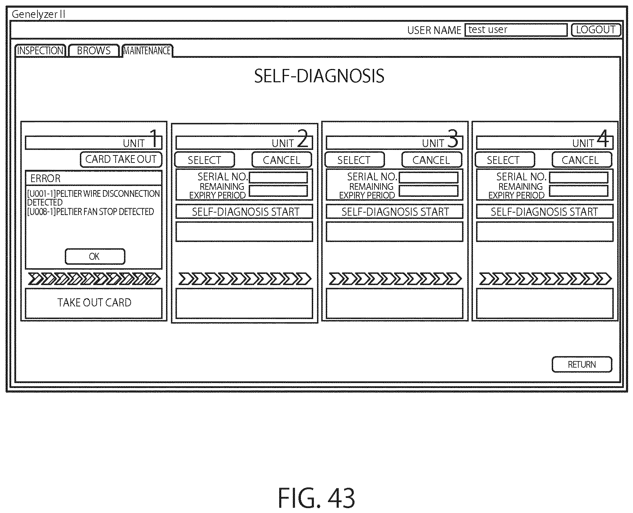

FIG. 43 is an illustration showing an example of a display screen of a self-diagnosis result. As shown in FIG. 43. The self-diagnosis result is displayed for each of the four inspection units 1 to 4 provided to the nucleic acid inspection apparatus 110. FIG. 43 shows an example of the display screen to display abnormal contents, in the inspection unit 1, which are abnormality in which wire disconnection is detected in the Peltier device 171 and abnormality in which the fan for the Peltier device 171 remains stopped. The display format to display abnormal contents is not limited to that shown in FIG. 43.

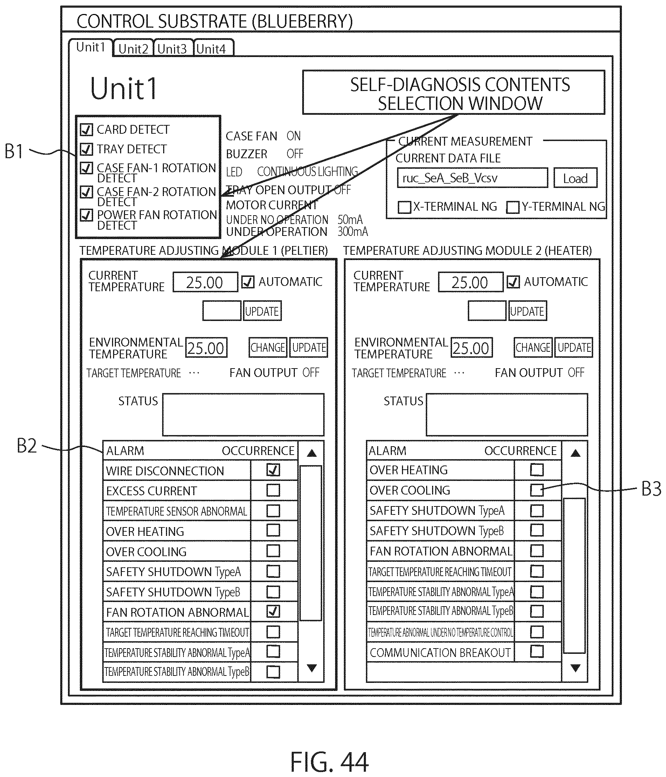

FIG. 44 is a display example of a diagnosis window on which a user arbitrarily selects a self-diagnosis item. On the display screen of FIG. 44, a check button group B1 for selecting detection of the card 700, detection of the trays 111 to 114, detection of rotation of the upper frame fan 155 (case fan 1), detection of rotation of the lower frame fan 155 (case fan 2), and detection of rotation of the power fan 129, a check button group B2 for selecting detailed items related to operation confirmation of the Peltier device 171, and a check button group B3 for selecting detailed items related to operation confirmation of the heater 170. FIG. 44 is an example of the diagnosis window which may be arbitrarily changed.

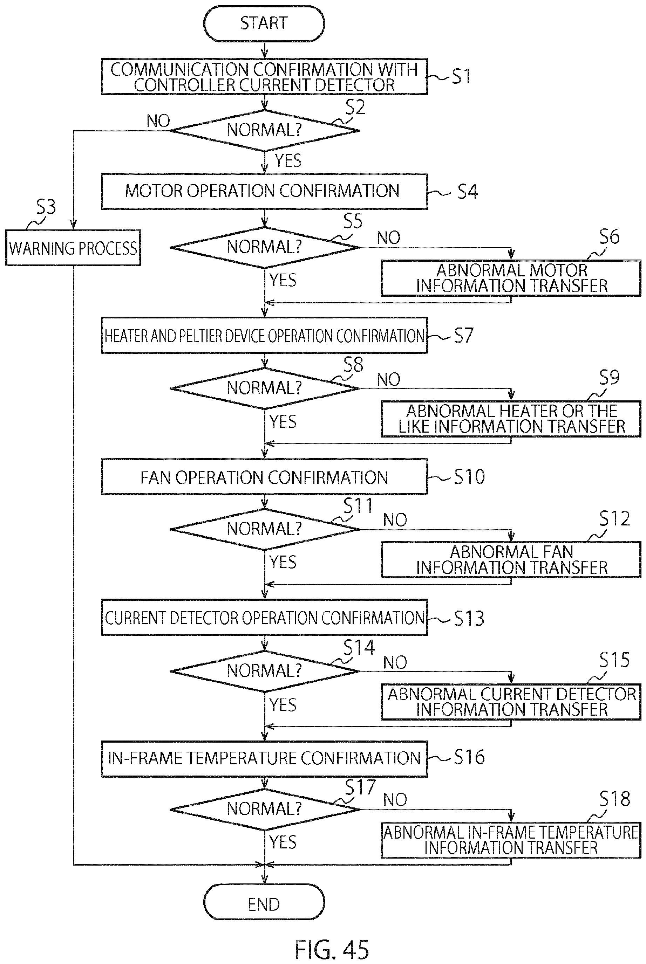

FIG. 45 is a flowchart showing an example of a self-diagnosis process to be automatically performed by the information processing apparatus 150 when turned on. Firstly, the information processing apparatus 150 performs self-diagnosis with the first diagnosis unit 131 (step S1). In more specifically, the diagnosis controller 139 in the information processing apparatus 150 performs communication confirmation with the controller 151 and the current detector 128 in the nucleic acid inspection apparatus 110. As described above, the controller 151 and the current detector 128 are both mounted on the control substrate 121. In step S1, the information processing apparatus 150 transmits a communication signal to the nucleic acid inspection apparatus 110 via the communication interface substrate 122. If a response signal to the communication signal is received by the information processing apparatus 150 via the communication interface substrate 122 within a predetermined period, it is determined that communication is confirmed to be normal (YES in step S2).

The information processing apparatus 150 also receives diagnosis results of the second diagnosis unit 132 to the sixth diagnosis unit 136 via the communication interface substrate 122. Therefore, if abnormality is determined by the first diagnosis unit 131 (NO in step S2), the warning process is performed without diagnosis by the second diagnosis unit 132 to the sixth diagnosis unit 136 (step S3).

If a diagnosis result of the first diagnosis unit 131 shows normality, the second diagnosis unit 132 performs self-diagnosis (step S4). In more specifically, the second diagnosis unit 132 performs operation confirmation of a plurality of motors. Here, as described above, a motor is rotated in a normal direction from the operation original position and then in a reverse direction, it is then determined whether the motor returns to the operation original position. If there is a motor determined as abnormal in step S4 (NO in step S5), information on the motor is transferred to the information processing apparatus 150 via the communication interface substrate 122 (step S6).

If a diagnosis result of the second diagnosis unit 132 shows normality (YES in step S5), the third diagnosis unit 133 performs self-diagnosis (step S7). In more specifically, the third diagnosis unit 133 performs operation confirmation of the heater 170 and the Peltier device 171. If at least either one of the heater 170 and the Peltier device 171 is determined as abnormal (NO in step S8), its information is transferred to the information processing apparatus 150 via the communication interface substrate 122 (step S9).

If a diagnosis result of the third diagnosis unit 133 shows normality (YES in step S8), the fourth diagnosis unit 134 performs self-diagnosis (step S10). In more specifically, the fourth diagnosis unit 134 performs operation confirmation of a fan. If it is determined as abnormal such that the fan does not rotate (NO in step S11), its information is transferred to the information processing apparatus 150 via the communication interface substrate 122 (step S12).

If a diagnosis result of the fourth diagnosis unit 134 shows normality (YES in step S11), the fifth diagnosis unit 135 performs self-diagnosis (step S13). In more specifically, the fifth diagnosis unit 134 performs operation confirmation of the current detector 128. After offset adjustments, and in the state where the specimen sample is not injected into the inspection flow passage of the DNA chip attached to the nucleic acid inspection card, if abnormality is determined such that a current flowing through the electrode on the inspection flow passage 712 does not become zero amperes (NO in step S14), its information is transferred to the information processing apparatus 150 via the communication interface substrate 122 (step S15).

If a diagnosis result of the fifth diagnosis unit 135 shows normality (YES in step S14), the sixth diagnosis unit 136 performs self-diagnosis (step S16). In more specifically, if the temperature in the frame of the nucleic acid inspection apparatus 110 is within a predetermined temperature range, normality is determined and, if out of the predetermined temperature range, abnormality is determined (step S17). If abnormality is determined, its information is transferred to the information processing apparatus 150 via the communication interface substrate 122 (step S17).

When receiving abnormality information in at least one of the steps S3, S6, S9, S12, S15, and S18 in FIG. 45, the information processing apparatus 150 performs the warning process such as displaying the abnormality information on the display screen, or the like.

As described above, in the nucleic acid inspection apparatus 110 according to the present embodiment, what a user is to do is just placing the nucleic acid inspection card 700 capable of performing nucleic acid amplification and nucleic acid inspection in a tray of the nucleic acid inspection apparatus 110, thereafter, the nucleic acid inspection apparatus 110 automatically performs nucleic acid amplification and nucleic acid inspection. Therefore, in addition to that labor of nucleic acid inspection can be omitted to improve convenience, time to obtain a nucleic acid inspection result can be drastically shortened.

Moreover, since all of the specimen sample and necessary reagents and the like can be stored in one nucleic acid inspection card 700 and nucleic acid amplification and nucleic acid inspection can be done within this card, the amount of reagents to be used can be reduced and a material cost for nucleic acid inspection can be drastically reduced.

In order to perform higher accurate positioning, as pre-steps of "move down the current probe 186" in S1 of FIG. 31, the flowing steps may be added.

(1) Firstly, in order to perform rough positioning of the nucleic acid inspection card 700 and the probe holder 26, the probe-axis motor 182 is driven to move down the probe holder 26 to insert the positioning pins 261 and 262 into positioning holes of the nucleic acid inspection card 700, as shown in FIG. 30. Then, the probe holder 26 is stopped before the current probe 186 is made contact with the associated electrode.

(2) Subsequently, in order to perform further positioning, the NC valve-axis motor 185 is driven to move up the NCV rod 23 and, before the top portion of the second rod 221, the top portion of which has been located at the highest position, is made contact with the associated cantilever, the NC valve-axis motor 185 is stopped.

By adding the above pre-steps, higher accurate positioning can be achieved.

The nucleic acid inspection apparatus 110 has necessary motors and the like installed compactly in a small-space frame such as shown in FIG. 18 and, as shown in FIG. 45, heat release is considered, so that compactness can be achieved and power consumption can be restricted.

Moreover, the information processing apparatus 150 according to the present embodiment automatically performs self-diagnosis with the first to sixth diagnosis units 131 to 136 when the nucleic acid inspection apparatus 110 is turned on. Therefore, any abnormality that occurs in the nucleic acid inspection apparatus 110 can be quickly detected, so that nucleic acid inspection in an abnormal state can be avoided. Moreover, if abnormality is determined, abnormal contents can be displayed on a display screen of the information processing apparatus 150, so that an abnormal location can be quickly identified. Depending on the situations, the buzzer 156 and the LED 157 of the nucleic acid inspection apparatus 110 can be used to notice a user of occurrence of abnormality.

Furthermore, in the present embodiment, among a plurality of self-diagnosis functions, any self-diagnosis function can be selected by a user on the display screen of the information processing apparatus 150 to be performed at any timing. Therefore, nucleic acid inspection can be performed in the most appropriate state of the nucleic acid inspection apparatus 110. Especially, in the present embodiment, on the GUI window displayed on the display screen of the information processing apparatus 150, any self-diagnosis item can be selected, so that selection of the self-diagnosis item is made easy to improve user convenience.

At least part of the nucleic acid inspection apparatus 110 explained in the embodiment may be configured with hardware or software. When it is configured with software, a program that performs at least part of the functions of the nucleic acid inspection apparatus 110 may be stored in a storage medium such as a flexible disk and CD-ROM, and then installed in a computer to run thereon. The storage medium may not be limited to a detachable one such as a magnetic disk and an optical disk but may be a standalone type such as a hard disk and a memory.

Moreover, a program that achieves at least part of the functions of the nucleic acid inspection apparatus 110 may be distributed via a communication network a (including wireless communication) such as the Internet. The program may also be distributed via an online network such as the Internet or a wireless network, or stored in a storage medium and distributed under the condition that the program is encrypted, modulated or compressed.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A nucleic acid inspection apparatus comprising:

    an installer to install a nucleic acid inspection device, the installer comprising a storage unit to store at least a specimen sample, an amplifier to amplify nucleic acid contained in the specimen sample stored in the storage unit, a first flow passage to move the specimen sample from the storage unit to the amplifier, an inspection unit to inspect the nucleic acid contained in the specimen sample nucleic-acid amplified by the amplifier, and a second flow passage to move the specimen sample from the amplifier to the inspection unit;
    a first opening/closing unit to open/close the first flow passage;
    a second opening/closing unit to open/close the second flow passage;
    a heater to heat the amplifier; and
    a controller to control the first and second opening/closing units so as to open/close in a predetermined order and to control the heater so as to heat the amplifier in conjunction with opening/closing operations of the first and second opening/closing units.

2. The nucleic acid inspection apparatus of claim 1 further comprising a third opening/closing provided in the first flow passage, the third opening/closing unit controlling flow of the specimen sample into the amplifier,
    wherein the first opening/closing unit is provided in the first flow passage, the first opening/closing unit controlling flow of the specimen sample from the storage unit,
    the second opening/closing unit is provided in the second flow passage, the second opening/closing unit controlling flow of the specimen sample to the inspection unit, and
    the controller opens the first opening/closing unit to move the specimen sample stored in the storage unit to the amplifier and then closes the second and third opening/closing units to heat the amplifier, at the heater.

3. The nucleic acid inspection apparatus of claim 2, wherein the storage unit further stores a first cleaning solution,
    wherein the nucleic acid inspection device comprises a third flow passage branching off from the first flow passage,
    the third flow passage moving the first cleaning solution from the storage unit to the amplifier, and

the nucleic acid inspection apparatus further comprising:

a fourth opening/closing unit to open/close the third flow passage; and
a heater/cooler for temperature adjustment of the inspection unit,
wherein the controller, after completion of nucleic acid amplification by the amplifier, opens the second to fourth opening/closing units to move the first cleaning solution to the amplifier via the third and first flow passages and closes the second opening/closing unit to perform temperature adjustment of the inspection unit, at the heater/cooler.

4. The nucleic acid inspection apparatus of claim 3, wherein the storage unit further stores a second cleaning solution, wherein the nucleic acid inspection device comprises a fourth flow passage branching off from the second flow passage, the fourth flow passage moving the second cleaning solution from the storage unit to the inspection unit, and the nucleic acid inspection apparatus further comprising a fifth opening/closing unit to open/close the fourth flow passage; and
wherein the controller opens the fifth opening/closing unit to move the second cleaning solution to the inspection unit via the fourth and second flow passages.

5. The nucleic acid inspection apparatus of claim 4, wherein the storage unit further stores a reagent to be used for nucleic acid inspection,
wherein the nucleic acid inspection device comprises a fifth flow passage branching off from the second flow passage, the fifth flow passage moving the reagent from the storage unit to the inspection unit, and
the nucleic acid inspection apparatus further comprising a sixth opening/closing unit to open/close the fifth flow passage; and
wherein the controller opens the sixth opening/closing unit to move the reagent to the inspection unit via the fifth and second flow passages to inspect the nucleic acid contained in the specimen sample, at the inspection unit.

6. The nucleic acid inspection apparatus of claim 5, wherein the nucleic acid inspection device comprises a plurality of electrodes, a plurality of molecules to cause hybridization between different kinds of nucleic acid being attached to the plurality of electrodes,
wherein the inspection unit determines whether an oxidation current flows to the plurality of electrodes due to hybridization when the reagent is moved to the inspection unit, to inspect nucleic acid contained in the specimen sample.

7. The nucleic acid inspection apparatus of claim 5, wherein the storage unit comprises a first storage chamber to store the specimen sample, a second storage chamber to store the first cleaning solution, a third storage chamber to store the second cleaning solution, and a third storage chamber to store the reagent,
the nucleic acid inspection apparatus further comprising four first rods to give pressure to the first to fourth storage chambers to push stored objects to associated flow passages,
wherein the controller moves the four first rods in one direction in synchronism one another, and
while the four first rods are moving in the one direction, one of the four first rods firstly gives pressure to the first storage chamber to push the specimen sample to the first flow passage, subsequently, another one of the four first rods gives pressure to the second storage chamber to push the first cleaning solution to the third flow passage, subsequently, a still another one of the four first rods gives pressure to the third storage chamber to push the second cleaning solution to the fourth flow passage, and subsequently, a further another one of the four first rods gives pressure to the fourth storage chamber to push the reagent to the fifth flow passage.

8. A base sequence detection chip comprising:

a plurality of first electrode groups provided apart from one another on a substrate, each first electrode group comprising a plurality of first electrodes provided apart from one another, each first electrode having a racetrack or oval flat shape, the plurality of first electrodes in each first electrode group being arranged so as to have longitudinal axes parallel one another; and
a probe provided in association with each first electrode, the probe being fixed to an associated first electrode, and the probe comprising a base sequence.

9. A base sequence detection chip comprising:

a plurality of first electrode groups provided apart from one another on a substrate, each first electrode group comprising a plurality of first electrodes provided apart from one another on concentric circles, each first electrode having a flat fan shape becoming wider toward circumferences of the concentric circles; and
a probe provided in association with each first electrode, the probe being fixed to an associated first electrode, and the probe comprising a base sequence.

**10.** The base sequence detection chip of claim 8, wherein, probes having identical base sequences are fixed to the plurality of first electrodes in each first electrode group.

**11.** The base sequence detection chip of claim 8, wherein, probes having base sequences different per first electrode group are fixed to the plurality of first electrodes,.

**12.** The base sequence detection chip of claim 8 further comprising:

a second electrode provided on the substrate, the second electrode supplying a current to the substrate when a voltage is applied between the second electrode and the plurality of first electrodes; and
a third electrode provided on the substrate, the third electrode controlling a voltage between the third electrode and the plurality of first electrodes to have predetermined voltage characteristics.

**13.** The base sequence detection chip of claim 12, wherein the plurality of first electrode groups are divided into first to fourth portions, the second portion being disposed between the first and fourth portions, the third portion being disposed between the second and fourth portions,
wherein the second electrode is divided into two portions, one portion of the second electrode has a U-shape, and the one portion of the second electrode has one end provided close to one end of the first portion and has another end provided close to one end of the second portion, the one end of the second portion being located on a same side as the one end of the first portion,
another portion of the second electrode has a U-shape, and the other portion of the second electrode has one end provided close to one end of the third portion and has another end provided close to one end of the fourth portion, the one end of the fourth portion being located on a same side as the one end of the third portion, and
the third electrode has a U-shape, and the third electrode has one end provided close to the other end of the second portion and has another end provided close to another end of the fourth portion.

**14.** A base sequence detection chip comprising:

a plurality of electrode groups provided apart from one another on a substrate, each electrode group comprising a plurality of first electrodes provided apart from one another;
a probe provided in association with each first electrode, the probe being fixed to an associated first electrode, and the probe comprising a base sequence; and
a cover member provided on the substrate so as to cover the plurality of electrode groups in a direction in which the plurality of electrode groups are arranged, the cover member forming a flow passage with the substrate, the cover member comprising an inlet for a reagent to flow in and an outlet for the reagent having passed through the flow passage to flow out,
wherein a first electrode closest to the inlet is provided at a position apart from the inlet by a distance two times or more a width of the flow passage.

**15.** The base sequence detection chip of claim 14, wherein the first electrode closest to the inlet is positioned at a distance two to three times the width of the flow passage.

**16.** The base sequence detection chip of claim 14, wherein the outlet is provided so that the reagent flows almost vertically to the substrate, a first electrode closest to the outlet being provided at a position apart from the outlet by a distance 1. 4 times or more the width of the flow passage.

**17.** The base sequence detection chip of claim 14, wherein probes having identical base sequences are fixed to the plurality of first electrodes in each electrode group,.

**18.** The base sequence detection chip of claim 14, wherein probes having base sequences different per electrode group are fixed to the plurality of first electrodes.

**19.** The base sequence detection chip of claim 14 further comprising:

a second electrode provided on the substrate, the second electrode supplying a current to the substrate when a voltage is applied between the second electrode and the plurality of first electrodes; and

a third electrode provided on the substrate, the third electrode controlling a voltage between the third electrode and the plurality of first electrodes to have predetermined voltage characteristics.

20. A nucleic acid inspection system comprising the nucleic acid inspection apparatus of claim 1 and an information processing apparatus to perform information transmission and reception with the nucleic acid inspection apparatus, wherein the nucleic acid inspection apparatus comprises:

a temperature adjuster to perform temperature adjustment of the inspection unit;

a ventilator to take in external air, circulate the taken external air inside a frame and take out the air to an outside of the frame;

a current detector to detect a current flowing to an electrode provided to the inspection unit; and

a temperature measuring unit to measure a temperature in the frame,

wherein the controller controls drive of the liquid mover, the heater, the temperature adjuster, and the ventilator,

the information processing apparatus comprises first to sixth diagnosis units to automatically perform self-diagnosis when the nucleic acid inspection apparatus is turned on,

the first diagnosis unit performs communication confirmation with the controller and the current detector,

the second diagnosis unit performs operation confirmation of the liquid mover,

the third diagnosis unit performs operation confirmation of the heater and the temperature adjuster,

the fourth diagnosis unit performs operation confirmation of the ventilator,

the fifth diagnosis unit performs operation confirmation of the current detector, and

the sixth diagnosis unit performs temperature confirmation inside the frame based on the temperature measured by the temperature measuring unit.

100

110

150

104

103

102

101

FIG. 1A

15

1    2    3    4

FIG. 1B

114

700

FIG. 1C

201  202  203  204

| DEVICE ID | | USER NAME | | LOGOUT |

INSPECTION | BROWSING | MAINTENANCE

**UNIT 1**

211
CANCEL   SELECT

SAMPLE ID [        ]

MANUFACTURE NUMBER [    ] MANUAL INPUT

INSPECTION NAME [    ]

EXPIRATION PERIOD [    ]

SERIAL NO. [    ]

COMMENT [        ]

DEVICE START-UP PROCESS
INCOMPLETE
WAIT FOR A WHILE

INSPECTION STOP   INSPECTION START

>>>>>>>>>>>>

**UNIT 2**

212
CANCEL   SELECT

SAMPLE ID [        ]

MANUFACTURE NUMBER [    ] MANUAL INPUT

INSPECTION NAME [    ]

EXPIRATION PERIOD [    ]

SERIAL NO. [    ]

COMMENT [        ]

DEVICE START-UP PROCESS
INCOMPLETE
WAIT FOR A WHILE

INSPECTION STOP   INSPECTION START

>>>>>>>>>>>>

**UNIT 3**

213
CANCEL   SELECT

SAMPLE ID [        ]

MANUFACTURE NUMBER [    ] MANUAL INPUT

INSPECTION NAME [    ]

EXPIRATION PERIOD [    ]

SERIAL NO. [    ]

COMMENT [        ]

DEVICE START-UP PROCESS
INCOMPLETE
WAIT FOR A WHILE

INSPECTION STOP   INSPECTION START

>>>>>>>>>>>>

**UNIT 4**

214
CANCEL   SELECT

SAMPLE ID [        ]

MANUFACTURE NUMBER [    ] MANUAL INPUT

INSPECTION NAME [    ]

EXPIRATION PERIOD [    ]

SERIAL NO. [    ]

COMMENT [        ]

DEVICE START-UP PROCESS
INCOMPLETE
WAIT FOR A WHILE

INSPECTION STOP   INSPECTION START

>>>>>>>>>>>>

231  221   232  222   233  223   234  224

FIG. 2

FIG. 3A

FIG. 3B

FIG. 3C

FIG. 4A

FIG. 4B

FIG. 4C

FIG. 4D

FIG. 5A

FIG. 5B

FIG. 6

FIG. 7

711c1　711c3
711c2　711c4

FIG. 8A

721c1　721c2　721c3
721c4

FRONT SURFACE

721c1　721c3
721c2　721c4

REAR SURFACE

FIG. 8B

710c1　710c2　710c3　710c4

FIG. 8C

FIG. 9

251

720

710a1

710

NOV

FIG. 10

740

730

720

710

710v4

A

A

FIG. 11A

740    710v4    720

234

710

FIG. 11B

FIG. 12

FIG. 13

FIG. 14

$$V_{refout} = -R_f/R_s \times V_{refin}$$

$$V_w = I_w \times R_w$$

FIG. 15

FIG. 16

FIG. 17

FIG. 18

FIG. 19

FIG. 20

FIG. 21

FIG. 22

151

150

CONTROLLER

COMMUNICATOR

152

| TRAY PRESENCE SENSOR | 153 |
| CARD PRESENCE SENSOR | 154 |
| FRAME FAN | 155 |
| BUZZER | 156 |
| LED | 157 |
| CURRENT PROBE CONTROLLER | 158 |
| MOTOR GROUP | 159 |
| PHOTOSENSOR | 160 |

TEMPERATURE ADJUSTER 162

TEMPERATURE SENSOR

161

POWER SUPPLIER 163

FIG. 23

FIG. 24

FIG. 25

FIG. 26

LINEAR MOTION

ROTATION
MOTION

14d

14c

12c

FIG. 27

20

205

184

201
202

191

203
204

211

212 213 214

FIG. 28

FIG. 29

FIG. 30A

FIG. 30B

FIG. 31

FIG. 32

FIG. 33

(a)    (b)    (c)

FIG. 34

FIG. 35

FIG. 36A

FIG. 36B

26

182

197

261 262

186

FIG. 37A

182

197

186

FIG. 37B

FIG. 38

```
                    ┌─────────────┐
                    │    START    │
                    └──────┬──────┘
                           ▼
┌──────────────────────────────────────────────────────┐
│        MOVE DOWN CURRENT PROBE FOR POSITIONING         │──S1
└──────────────────────────┬───────────────────────────┘
                           ▼
┌──────────────────────────────────────────────────────┐
│         POSITIONING WITH POSITIONING NOV ROD          │──S2
└──────────────────────────┬───────────────────────────┘
                           ▼
┌──────────────────────────────────────────────────────┐
│        POSITIONING WITH HEATER AND PELTIER DEVICE      │──S3
└──────────────────────────┬───────────────────────────┘
                           ▼
┌──────────────────────────────────────────────────────┐
│       OPEN NC VALVE OF SYRINGE FOR SPECIMEN SAMPLE     │──S4
└──────────────────────────┬───────────────────────────┘
                           ▼
┌──────────────────────────────────────────────────────┐
│     MOVE SPECIMEN SAMPLE TO AMPLIFICATION FLOW PASSAGE │──S5
└──────────────────────────┬───────────────────────────┘
                           ▼
┌──────────────────────────────────────────────────────┐
│  CLOSE NO VALVE AND HEAT AMPLIFICATION FLOW PASSAGE    │──S6
│  WITH HEATER                                           │
└──────────────────────────┬───────────────────────────┘
                           ▼
┌──────────────────────────────────────────────────────┐
│                     OPEN NO VALVE                      │──S7
└──────────────────────────┬───────────────────────────┘
                           ▼
┌──────────────────────────────────────────────────────┐
│   OPEN NC VALVE OF SYRINGE FOR FIRST CLEANING SOLUTION │──S8
└──────────────────────────┬───────────────────────────┘
                           ▼
┌──────────────────────────────────────────────────────┐
│  MOVE FIRST CLEANING SOLUTION TO AMPLIFICATION FLOW    │──S9
│  PASSAGE TO MOVE NUCLEIC-ACID AMPLIFIED SPECIMEN       │
│  SAMPLE TO DETECTION FLOW PASSAGE                      │
└──────────────────────────┬───────────────────────────┘
                           ▼
┌──────────────────────────────────────────────────────┐
│  CLOSE NO VALVE AND HEAT INSPECTION FLOW PASSAGE       │──S10
│  WITH PELTIER                                          │
└──────────────────────────┬───────────────────────────┘
                           ▼
┌──────────────────────────────────────────────────────┐
│  OPEN NC VALVE OF SYRINGE FOR SECOND CLEANING SOLUTION │──S11
└──────────────────────────┬───────────────────────────┘
                           ▼
┌──────────────────────────────────────────────────────┐
│  MOVE SECOND CLEANING SOLUTION TO INSPECTION FLOW      │──S12
│  PASSAGE                                               │
└──────────────────────────┬───────────────────────────┘
                           ▼
┌──────────────────────────────────────────────────────┐
│    OPEN NC VALVE OF SYRINGE FOR INTERCALATING AGENT    │──S13
└──────────────────────────┬───────────────────────────┘
                           ▼
┌──────────────────────────────────────────────────────┐
│  MOVE INTERCALATING AGENT TO INSPECTION FLOW           │──S14
│  PASSAGE AND DETECT CURRENT FLOWING TO ELECTRODE       │
│  WITH CURRENT PROBE                                    │
└──────────────────────────┬───────────────────────────┘
                           ▼
                    ┌─────────────┐
                    │     END     │
                    └─────────────┘
```

FIG. 39

FIG. 40A    FIG. 40B    FIG. 40C    FIG. 40D    FIG. 40E

FIG. 41

131 — FIRST DIAGNOSIS UNIT

132 — SECOND DIAGNOSIS UNIT

133 — THIRD DIAGNOSIS UNIT

134 — FOURTH DIAGNOSIS UNIT

135 — FIFTH DIAGNOSIS UNIT

136 — SIXTH DIAGNOSIS UNIT

DIAGNOSIS CONTROLLER

~139

WARNING UNIT ~137

DIAGNOSIS WINDOW GENERATOR ~138

FIG. 42

Genelyzer II

USER NAME [test user] | [LOGOUT]

[INSPECTION] [BROWS] [MAINTENANCE]

## SELF-DIAGNOSIS

| UNIT 1 | UNIT 2 | UNIT 3 | UNIT 4 |
|---|---|---|---|
| [CARD TAKE OUT] | [SELECT] [CANCEL] | [SELECT] [CANCEL] | [SELECT] [CANCEL] |
| ERROR | SERIAL NO. [ ] | SERIAL NO. [ ] | SERIAL NO. [ ] |
| [U001-1]PELTIER WIRE DISCONNECTION DETECTED | REMAINING EXPIRY PERIOD [ ] | REMAINING EXPIRY PERIOD [ ] | REMAINING EXPIRY PERIOD [ ] |
| [U008-1]PELTIER FAN STOP DETECTED | SELF-DIAGNOSIS START | SELF-DIAGNOSIS START | SELF-DIAGNOSIS START |
| [OK] | | | |
| »»»»»»»»»» | »»»»»»»»»» | »»»»»»»»»» | »»»»»»»»»» |
| TAKE OUT CARD | | | |

[RETURN]

# FIG. 43

**CONTROL SUBSTRATE (BLUEBERRY)**

| Unit1 | Unit2 | Unit3 | Unit4 |

## Unit1

SELF-DIAGNOSIS CONTENTS
SELECTION WINDOW

B1

- ☑ CARD DETECT
- ☑ TRAY DETECT
- ☑ CASE FAN-1 ROTATION DETECT
- ☑ CASE FAN-2 ROTATION DETECT
- ☑ POWER FAN ROTATION DETECT

CASE FAN    ON
BUZZER      OFF
LED      CONTINUOUS LIGHTING
TRAY OPEN OUTPUT OFF
MOTOR CURRENT
UNDER NO OPERATION  50mA
UNDER OPERATION    300mA

CURRENT MEASUREMENT
CURRENT DATA FILE

| ruc_SeA_SeB_V.csv | Load |

☐X-TERMINAL NG  ☐Y-TERMINAL NG

TEMPERATURE ADJUSTING MODULE 1 (PELTIER)

CURRENT TEMPERATURE  | 25.00 |  ☑ AUTOMATIC

|  | UPDATE |

ENVIRONMENTAL TEMPERATURE | 25.00 |  | CHANGE | UPDATE |

TARGET TEMPERATURE  ···       FAN OUTPUT  OFF

STATUS | |

| ALARM | OCCURRENCE | ▲ |
|---|---|---|
| WIRE DISCONNECTION | ☑ | |
| EXCESS CURRENT | ☐ | |
| TEMPERATURE SENSOR ABNORMAL | ☐ | |
| OVER HEATING | ☐ | |
| OVER COOLING | ☐ | |
| SAFETY SHUTDOWN TypeA | ☐ | |
| SAFETY SHUTDOWN TypeB | ☐ | |
| FAN ROTATION ABNORMAL | ☑ | |
| TARGET TEMPERATURE REACHING TIMEOUT | ☐ | |
| TEMPERATURE STABILITY ABNORMAL TypeA | ☐ | |
| TEMPERATURE STABILITY ABNORMAL TypeB | ☐ | ▼ |

TEMPERATURE ADJUSTING MODULE 2 (HEATER)

CURRENT TEMPERATURE  | 25.00 |  ☑ AUTOMATIC

|  | UPDATE |

ENVIRONMENTAL TEMPERATURE | 25.00 |  | CHANGE | UPDATE |

TARGET TEMPERATURE  ···       FAN OUTPUT  OFF

STATUS | |

| ALARM | OCCURRENCE | ▲ |
|---|---|---|
| OVER HEATING | ☐ | |
| OVER COOLING | ☐ | |
| SAFETY SHUTDOWN TypeA | ☐ | |
| SAFETY SHUTDOWN TypeB | ☐ | |
| FAN ROTATION ABNORMAL | ☐ | |
| TARGET TEMPERATURE REACHING TIMEOUT | ☐ | |
| TEMPERATURE STABILITY ABNORMAL TypeA | ☐ | |
| TEMPERATURE STABILITY ABNORMAL TypeB | ☐ | |
| TEMPERATURE ABNORMAL UNDER NO TEMPERATURE CONTROL | ☐ | |
| COMMUNICATION BREAKOUT | ☐ | ▼ |

B2

B3

FIG. 44

START

COMMUNICATION CONFIRMATION WITH CONTROLLER CURRENT DETECTOR — S1

S2 NORMAL?

NO

YES

MOTOR OPERATION CONFIRMATION — S4

S3

WARNING PROCESS

S5 NORMAL?

NO

S6 ABNORMAL MOTOR INFORMATION TRANSFER

YES

HEATER AND PELTIER DEVICE OPERATION CONFIRMATION — S7

S8 NORMAL?

NO

S9 ABNORMAL HEATER OR THE LIKE INFORMATION TRANSFER

YES

FAN OPERATION CONFIRMATION — S10

S11 NORMAL?

NO

S12 ABNORMAL FAN INFORMATION TRANSFER

YES

CURRENT DETECTOR OPERATION CONFIRMATION — S13

S14 NORMAL?

NO

S15 ABNORMAL CURRENT DETECTOR INFORMATION TRANSFER

YES

IN-FRAME TEMPERATURE CONFIRMATION — S16

S17 NORMAL?

NO

S18 ABNORMAL IN-FRAME TEMPERATURE INFORMATION TRANSFER

YES

END

FIG. 45

## INTERNATIONAL SEARCH REPORT

| International application No. |
| --- |
| PCT/JP2015/076532 |

A.  CLASSIFICATION OF SUBJECT MATTER
*C12M1/00*(2006.01)i, *C12Q1/68*(2006.01)i, *G01N27/28*(2006.01)i, *G01N27/327*
(2006.01)i, *G01N27/416*(2006.01)i

According to International Patent Classification (IPC) or to both national classification and IPC

B.  FIELDS SEARCHED

Minimum documentation searched (classification system followed by classification symbols)
C12M1/00, C12Q1/68, G01N27/28, G01N27/327, G01N27/416

Documentation searched other than minimum documentation to the extent that such documents are included in the fields searched
Jitsuyo Shinan Koho       1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)
JSTPlus/JMEDPlus/JST7580(JDreamIII), CAplus/MEDLINE/BIOSIS(STN)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 2005-261298 A  (Toshiba Corp.),<br>29 September 2005 (29.09.2005),<br>paragraphs [0049] to [0050], [0063], [0071] to<br>[0075], [0083]; fig. 24<br>& US 2006/0216812 A1<br>paragraphs [0075] to [0076], [0090], [0099] to<br>[0103]; fig. 26 | 1-7,20<br>8-19 |
| A | JP 2014-060924 A  (Toshiba Corp.),<br>10 April 2014 (10.04.2014),<br>paragraphs [0025], [0038]; fig. 10 to 12<br>(Family: none) | 1-20 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    10 December 2015 (10.12.15) | Date of mailing of the international search report<br>    22 December 2015 (22.12.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/076532 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-096447 A  (Toshiba Corp.), 24 April 2008 (24.04.2008), paragraphs [0014] to [0015], [0027] to [0061]; fig. 4 to 5, 7 to 13 & US 2008/0060940 A1 paragraphs [0116] to [0117], [0128] to [0164]; fig. 3, 5, 7 to 13 & US 2005/0158787 A1     & US 2010/0121490 A1 & WO 2004/011925 A1     & EP 1542000 A1 & EP 1986000 A2     & TW 200404896 A & CN 1596369 A     & KR 10-2004-0062657 A & CN 101158664 A     & CN 101358945 A | 1-20 |

Form PCT/ISA/210 (continuation of second sheet) (July 2009)

**EP 3 199 615 A1**

<table>
<tr><td><b>INTERNATIONAL SEARCH REPORT</b></td><td>International application No.<br>PCT/JP2015/076532</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
     See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

Continuation of Box No.III of continuation of first sheet(2)

Claims are classified into the following three inventions.
Invention 1: claims 1-7 and 20
Invention 2: claims 8-13
Invention 3: claims 14-19
Reason for that the requirement of unity of invention is not satisfied:
Document 1: JP 2005-261298 A (Toshiba Corp.), 29 September 2005 (29.09.2005), paragraphs [0049] to [0050], [0063], [0071] to [0075], [0083]; fig. 24 & US 2006/0216812 A1, paragraphs [0075] to [0076], [0090], [0099] to [0103]; fig. 26
(Invention 1) claims 1-7 and 20
Document 1 discloses a nucleic acid detection cassette which involves a nucleic acid extraction zone, a nucleic acid amplification zone and a nucleic acid detection zone, wherein valves are respectively provided between the reaction zones, the temperatures of the reaction zones can be controlled separately, and a reacted portion of a reagent can be introduced into the subsequent reaction zone by controlling the opening/closing of each of the valves (see particularly paragraphs [0071] to [0075], fig. 24).
Consequently, claim 1 has no special technical feature, since said claim 1 lacks novelty in the light of the document 1.
However, claim 2, which is a claim depend on claim 1, has a special technical feature "the nucleic acid testing apparatus according to claim 1, wherein the nucleic acid testing apparatus is additionally provided with a third opening/closing section which is arranged at the first flow path and can control the inflow of the test sample into the amplification section, the first opening/closing section is arranged at the first flow path and can control the outflow of the test sample from the storage section, the second opening/closing section is arranged at the second flow path and can control the inflow of the test sample into the testing section, and the control section enables the first opening/closing section to be opened to transfer the test sample stored in the storage section to the amplification section and then enables the second opening/closing section and the third opening/closing section to be closed so that the amplification section can be heated in the heating section", and claims 3-7 have the same special technical feature as that of claim 2.
Consequently, claims 1-7 are classified into Invention 1.
Further, claim 20 is dependent on claim 1 and has an inventive relationship with claim 1, and is therefore classified into Invention 1.
(Invention 2) claims 8-13
It is not considered that claims 8-13 have a technical feature which is same as or corresponding to claim 2 classified into Invention 1.
Further, claims 8-13 are not dependent on claim 1.
In addition, claims 8-13 have no relationship such that these claims are substantially same as or equivalent to any claim classified into Invention 1.
Consequently, claims 8-13 cannot be classified into Invention 1.

(Continued to next extra sheet)

**INTERNATIONAL SEARCH REPORT**

International application No.

PCT/JP2015/076532

And claims 8 and 10-13 have a special technical feature "a nucleotide sequence detection chip provided with: multiple first electrode groups which are arranged away from each other on a substrate, wherein each of the first electrode groups comprises multiple first electrodes which are arranged away from each other, each of the first electrodes has a racetrack-like or oval planar shape, and the multiple first electrodes in each of the first electrode groups are arranged in parallel with each other in such a manner that the longer axes of the electrodes are parallel with each other; and probes which are respectively provided corresponding to the first electrodes and are respectively fixed to the corresponding first electrodes, and each of which comprises a nucleotide sequence", and are therefore classified into Invention 2.

Further, claim 9 has an inventive relationship with claim 8, and is therefore classified into Invention 2.

(Invention 3) claims 14-19

It cannot be considered that claims 14-19 have a technical feature same as or corresponding to claim 2 classified into Invention 1 or claim 8 classified into Invention 2.

Further, claims 14-19 is not dependent on either claim 1 or claim 8.

In addition, claims 14-19 have no relationship such that these claims are substantially same as or equivalent to any claim classified into Invention 1 or Invention 2.

Consequently, claims 14-19 cannot be classified into either Invention 1 or Invention 2.

And claims 14-19 have a special technical feature "a nucleotide sequence detection chip provided with multiple electrode groups which are arranged away from each other on a substrate and each of which comprises multiple first electrodes arranged away from each other, probes which are respectively provided corresponding to the first electrodes and are respectively fixed to the corresponding first electrodes and each of which comprises a nucleotide sequence, and a cover member which is arranged on the substrate so as to cover the multiple electrode groups along the direction of the arrangement of the multiple electrode groups, forms a flow path together with the substrate, and is equipped with an inlet through which a regent can flow in and an outlet through which the regent that has passed through the flow path can flow out, wherein a first electrode that is located most closely to the inlet is provided at a position that is located apart by 2.0 folds or more the width of the flow path from the inlet", and are therefore classified into Invention 3.

Form PCT/ISA/210 (extra sheet) (July 2009)